(19) **Europäisches Patentamt / European Patent Office / Office européen des brevets**

(11) **EP 4 679 458 A1**

(12) **EUROPEAN PATENT APPLICATION**
published in accordance with Art. 153(4) EPC

(43) Date of publication:
**14.01.2026 Bulletin 2026/03**

(21) Application number: **24767103.5**

(22) Date of filing: **04.03.2024**

(51) International Patent Classification (IPC):
$G21K\ 7/00^{(2006.01)}$    $G02B\ 5/18^{(2006.01)}$
$G02B\ 21/06^{(2006.01)}$    $G02B\ 21/36^{(2006.01)}$
$G21K\ 1/00^{(2026.01)}$    $G21K\ 1/06^{(2006.01)}$
$G21K\ 5/02^{(2006.01)}$

(52) Cooperative Patent Classification (CPC):
G02B 5/18; G02B 21/06; G02B 21/36; G21K 1/00;
G21K 1/06; G21K 5/02; G21K 7/00

(86) International application number:
**PCT/JP2024/007992**

(87) International publication number:
**WO 2024/185735 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2023 JP 2023035109**

(71) Applicant: **RIKEN**
**Wako-shi, Saitama 351-0198 (JP)**

(72) Inventors:
• **KOHMURA, Yoshiki**
 **Wako-shi Saitama 351-0198 (JP)**
• **TAKANO, Hidekazu**
 **Wako-shi Saitama 351-0198 (JP)**
• **YOKOTA, Hideo**
 **Wako-shi Saitama 351-0198 (JP)**

(74) Representative: **Huebner, Stefan Rolf**
 **Postfach 101317**
 **80087 München (DE)**

(54) **X-RAY ILLUMINATION MICROSCOPE AND METHOD FOR CAPTURING IMAGE OF LUMINESCENT MATERIAL**

(57) In order to improve the resolution of an image of a luminescent material excited by X-rays, an embodiment of the present disclosure provides a microscope 100 comprising an X-ray irradiation unit and an observation optical system. The X-ray irradiation unit 10 generates a patterned X-ray sheet beam 1 for illuminating an object to be observed 7. This patterned X-ray sheet beam has an intensity pattern 2 whose intensity varies repeatedly within a partial region 32 of a sheet area 3 having spread, with respect to a position in a direction within the spread of the partial region. The observation optical system 50 is arranged to receive radiation of an observation wavelength from an observation area 4, the observation area including at least a portion of the partial region. An embodiment of the present disclosure also provides a method for capturing an image of a luminescent material.

FIG. 1

**Description**

Technical Field

The present disclosure relates to an X-ray illumination microscope and a method for capturing an image of a luminescent material. More specifically, the present disclosure relates to an X-ray illumination microscope and a method for capturing an image of a luminescent material that can perform super-resolution by devising X-ray illumination.

Background Art

There is a growing demand for advanced microscopy techniques. For instance, obtaining images with a resolution capable of resolving points approximately 20 nm apart could enable the observation of phenomena occurring in synaptic gaps of neurons. Various research and development efforts utilizing diverse technologies have been conducted toward such a high goal. In the optical wavelength range, super-resolution techniques have been developed. For example, Structured Illumination Microscopy (SIM) has garnered attention for its ability to reduce the overall point spread function (PSF), a performance measure regarding resolution limits, by optimizing the illumination optical system (Non-Patent Document 1). Microscopy utilizing the high light-collimation capability of X-rays, which have shorter wavelengths than light in the optical range, have also been developed. Some of the inventors of the present disclosure aim to develop a microscopy method with X-ray light sheet microscopy called the MAXWELL technique (Microscopy by Achromatic X-rays With Emission of Laminar Light Technique) (Non-Patent Document 2).

Citation List

Non-Patent Document(s)

Non-Patent Document 1: Bi-Chang Chen et al., "Lattice light-sheet microscopy: Imaging molecules to embryos at high spatiotemporal resolution" Science, 346, 6208, 1257998-1-1257998-10 (2014), DOI: 10.1126/science.125799

Non-Patent Document 2: Y. Kohmura et al., "The new X-ray/visible microscopy MAXWELL technique for fast three-dimensional nanoimaging with isotropic resolution", Scientific Reports, 12:9668 (2022), DOI: 10.1038/s41598-022-13377-w

Non-Patent Document 3: J. H. Bruning et al., "Digital wavefront measuring interferometer for testing optical surfaces and lenses," Appl. Opt., 13, 2693-2703 (1974), DOI: 10.1364/AO.13.002693

Non-Patent Document 4: A. Maiden et al., "Further improvements to the ptychographical iterative engine," Optica, Vol. 4, No. 7, pp. 736-745 (2017), DOI: 10.1364/OPTICA.4.000736

Non-Patent Document 5: S. Dong et al., "High-resolution fluorescence imaging via pattern- -illuminated Fourier ptychography," OPTICS EXPRESS, Vol. 22, No. 17, pp. 20856-20870 (2014), DOI: 10.1364/OE.22.020856

Summary of Disclosure

Technical Problem

In X-ray light sheet microscopy, which utilizes X-rays for illumination, the light sheet of X-rays excites luminescent materials, and the resulting luminescence is observed or imaged using an observation optical system. This enables the achievement of high resolution that cannot be obtained using illumination in the optical wavelength range. One reason for the high resolution of X-ray light sheet microscopy is the general properties of X-rays. X-rays, which have short wavelengths, are expected to exhibit ideal focusing properties that reach the diffraction limit. X-rays, which have high penetrating power with minimal refraction, can maintain their focusing properties even within the object to be observed. Therefore, X-rays are inherently advantageous as an illumination source for microscopy. In fact, the resolution achieved in conventional X-ray light sheet microscopy (Non-Patent Document 2) is approximately 65 nm (full width at half maximum) at the thinnest part of the X-ray sheet beam. In conventional X-ray light sheet microscopes, the optical axis of the observation optical system is oriented with the thickness direction of the X-ray sheet beam, and it has been possible to excite luminescent materials and image them only in a range that is extremely thin compared to the depth of field of the observation optical system.

In conventional X-ray light sheet microscopes, although it is possible to perform extremely high resolution in the optical axis direction of the observation optical system, the resolution in directions perpendicular to the optical axis of the observation optical system, i.e., directions in which the field of view and the acquired image are spread, remains that of the observation optical system. Here, the typical resolution of an observation optical system is the diffraction limit (e.g., 400 nm for visible light). Even in X-ray light sheet microscopes that use X-rays as illumination, further improvement in resolution in the directions perpendicular to the optical axis of the observation optical system remains a continuing challenge.

The present disclosure aims to solve at least some of the above problems and contribute to the advancement of microscopy by providing a new X-ray illumination microscopy methodology and a method for capturing images of luminescent materials.

Solution to Problem

The inventors conceived of applying a structured illumination microscopy method that employs patterned illumination to the X-ray light sheet microscopy method, and completed the invention of the present disclosure.

That is, in an embodiment of the present disclosure, provided is a microscope comprising: an X-ray irradiation unit that generates a patterned X-ray sheet beam for illuminating an object to be observed, the patterned X-ray sheet beam having an intensity pattern in which intensity varies repeatedly with respect to a position in a direction included in a spread in a partial region of a sheet area having a spread; and an observation optical system that receives radiation of an observation wavelength from the observation area, the observation optical system being positioned so that the observation area includes at least a portion of the partial region.

In a further embodiment of the present disclosure, provided is a method for capturing an image of a luminescent material using the microscope according to claim 1, comprising: a step of placing a labeled portion of an object to be observed, the labeled portion being made of an X-ray excitable luminescent material in the partial region; an irradiation step of generating the patterned X-ray sheet beam by the X-ray irradiation unit; and a capturing step of receiving radiation of an observation wavelength from the X-ray excitable luminescent material by the observation optical system.

In the present disclosure, an X-ray sheet beam refers to an X-ray beam of a traveling wave or a standing wave that has high intensity in a sheet area of finite thickness in space and travels in one of the directions within the sheet-like spread. Here, the thickness of the X-ray sheet beam may be uniform or nonuniform. A patterned X-ray sheet beam is similar to an X-ray sheet beam as a whole, but has an intensity pattern that repeats in at least a portion region of the sheet area. The profile of an X-ray sheet beam or a patterned X-ray sheet beam is defined by the local intensity of X-rays and can be determined by selecting regions of high intensity, specifying their contours, or calculating or predicting them based on the effects of optical elements used to generate the beam. In the present disclosure, an X-ray irradiation unit refers to a functional element that generates an X-ray beam for the intended illumination. The X-ray irradiation unit may or may not include a light source that generates X-rays. For example, an X-ray irradiation unit may comprise an optical system that converts an external X-ray beam into an X-ray sheet beam using an X-ray optical system such as a Walter mirror, and an optical system that generates a patterned X-ray sheet beam with an intensity pattern from the X-ray sheet beam.

The observation optical system in the present disclosure may include any elements for acquiring data (image data) in any form for forming an image. The sheet area is not a mathematical two-dimensional surface, but an area that has thickness and spread. A partial region is any part of the sheet area. When the term "repeatedly" is used in the present disclosure in relation to space, complete periodicity is not required for the repetition. In addition, a stripe pattern is a pattern in which stripes are formed, and complete periodicity or infinite extension is not required. A typical one of the observation optical systems in the present disclosure includes an imaging optical system and a light-receiving element such as an electronic imager or photographic film. The observation optical system may include optical elements that are commonly used in ordinary microscopes, such as mirrors, apertures, relay optics, and filters, as necessary. The observation area in the observation optical system generally refers to an area from which information is obtained by the observation optical system through radiation emitted from that area. The optical axis for the observation optical system determines the main direction in which radiation from the observation area is received. The field of view is intentionally set according to the size of the imaging optical system and imager of the observation optical system or for other purposes, and spreads in a direction transverse to the optical axis. Depth of field (DOF) refers to the range in the optical axis direction in which the observation optical system provides the resolution required for its intended purpose with its own resolution. Therefore, typically, the field of view determines the angle of view and the depth of field determines the focus range; thus the observation area is a spatial volume defined by the width of the field of view and the depth of field. The observation wavelength is a single wavelength or a range of wavelengths that is typically selected in the optical wave region or determined by the performance of the optical elements.

In the present disclosure, radiation refers to electromagnetic wave radiation of any energy, i.e., any wavelength, and the term "optical wave region" mainly refers to the wavelength range including infrared (including terahertz waves), visible, and ultraviolet. Therefore, the observation wavelength is typically a single wavelength or a range of wavelengths specified in the wavelength range including infrared (including terahertz waves), visible, and ultraviolet. As mentioned above, the present disclosure generally adopts terms used in the field of optics, particularly in the field of optical instruments including microscopes. These terms may be used for electromagnetic radiation of wavelengths other than visible light (including soft X-ray and hard X-ray regions). For example, the term "illumination" may include radiation at wavelengths different from the observation wavelength. Therefore, irradiation of radiation used for exciting or sensitizing materials capable of electronic transitions, or irradiation of radiation not intended to directly cause changes in brightness, may also be referred to as "illumination." Additionally, similar to the Non-Patent Document 2, the term "light" may be used in the context of X-rays, such as in the expression "light sheet" in structured illumination microscopy techniques in the optical wave region. Unless otherwise specified, "wavelength" refers to the wavelength in a vacuum. When describing values (e.g., the distribution of X-ray intensity corresponding to position) assigned across space, expressions such as "structured," "having a structure," or "showing a structure" indicate that the values are not uniform but vary with respect to space.

Advantageous Effects of Disclosure

Any of the embodiments of the present disclosure can provide high-resolution microscopy and a method for capturing an image of luminescent material with high resolution using X-rays.

Brief Description of Drawings

FIG. 1 is a perspective view showing a schematic diagram of an X-ray illumination microscope in an embodiment of the present disclosure.

FIGS. 2A-B are schematic diagrams illustrating the relationship between a partial region in the sheet area and an observation area in the embodiment of the present disclosure, in a plan view (FIG. 2A) and an elevation view (FIG. 2B).

FIG. 3A-B are a plan view (FIG. 3A) and an elevation view (FIG. 3B) showing a schematic structure of a sample (object to be observed) and X-ray illumination in a conventional X-ray light sheet microscope.

FIGS. 4A-C are explanatory drawings illustrating examples of the schematic structure of a patterned X-ray sheet beam in an X-ray illumination microscope according to an embodiment of the present disclosure; a structure having a stripe pattern repeating in x direction (FIG. 4A), a structure having a stripe pattern repeating in y direction (FIG. 4B), and a structure capable of increasing the resolution in both x and the y directions (FIG. 4C).

FIG. 5 is an explanatory diagram showing a two-dimensional lattice pattern that may be another example of a patterned X-ray sheet beam in an X-ray illumination microscope of the present embodiment.

FIG. 6 is a perspective view showing an example of a patterned X-ray sheet beam in an X-ray illumination microscope according to an embodiment of the present disclosure, in which the intensity pattern is a multi-layer pattern.

FIGS. 7A-B are explanatory diagrams illustrating a situation in which a sheet beam of X-rays is interfered with in a crossed arrangement to generate a stripe pattern in the embodiment of the present disclosure, showing cases where the crossing angle is large (FIG. 7A) and small (FIG. 7B).

FIGS. 8A-B are structural diagrams showing examples of X-ray irradiation units that generate intensity patterns of patterned X-ray sheet beams in embodiments of the present disclosure, one employing an X-ray convergence element (X-ray converging unit) and a diffraction grating (FIG. 8A), and the other employing an X-ray branching element (X-ray branching unit) and an X-ray interference unit (FIG. 8B).

FIGS. 9A-B are a plan view (FIG. 9A) and a cross-sectional view (FIG. 9B) showing a patterned X-ray sheet beam in the case where a stripe pattern is created by the Talbot effect of a transmission diffraction grating as a specific structure of the embodiment of the present disclosure.

FIGS. 10A-B are structural diagrams showing structures in which two X-ray sheet beams are interfered by wavefront dividing interference using prisms in the embodiment of the present disclosure; a structure in which two prisms are used to produce two X-ray sheet beams (FIG. 10A) and a structure in which one prism is used to produce two X-ray sheet beams (FIG. 10B).

FIG. 11 is a configuration diagram showing a configuration in which three X-ray sheet beams are interfered by wavefront dividing interference using prisms in an embodiment of the present disclosure.

FIGS. 12A-B are schematic diagrams showing calculation examples of interference patterns by three X-ray sheet beams in the embodiment of the present disclosure.

FIGS. 13A-C are explanatory diagrams illustrating situations assumed in the super-resolution algorithm for precisely determining the positions of light-emitting points excited by illumination with patterned X-ray sheet beams having stripe patterns in the embodiment of the present disclosure. They show a graph of the X-ray intensity pattern shift (FIG. 13A), a graph showing the amount of light obtained by shifting the phase of the pattern (FIG. 13B), and a graph showing the position of the image obtained by super-resolution within the period of the X-ray intensity pattern (FIG. 13C).

FIG. 14 is an explanatory diagram showing the concept of phase correction by unwrapping calculation in an embodiment of the present disclosure.

FIG. 15 is a flowchart illustrating an example of the method of capturing an image of a luminescent material in an embodiment of the present disclosure.

FIGS. 16A and 16B are flowcharts illustrating details of the shooting step (FIG. 16A) and the image reconstruction step (FIG. 16B) in the method for shooting an image of a luminescent material in an embodiment of the present disclosure.

FIG. 17 is a structural diagram showing an example of the structure of an X-ray irradiation unit that generates an intensity pattern of a patterned X-ray sheet beam in the present embodiment, which employs a pinhole array and a two-dimensional Walter mirror.

FIG. 18 is a perspective view showing the structure of an X-ray illumination microscope in an observation experiment of the present disclosure.

FIGS. 19A-C are microscope images showing scintillation images taken in the embodiment of the present disclosure.

FIG. 20 is a graph showing the average brightness within the square of white lines in FIGS. 19A-C as a function of the translation amount of the diffraction grating in the embodiment of the present disclosure.

FIGS. 21A and 21B are graphs illustrating the process of determining super-resolution performance based on luminance changes. FIG. 21A shows the luminance in FIG. 20 for a range of translational positions of the diffraction grating, and FIG. 21B shows the difference values of the luminance.

Description of Embodiments

The following describes embodiments of the X-ray illumination microscope and the method for capturing an image of a luminescent material of the present disclosure. Unless otherwise specified in the following description, common parts or elements are indicated by common reference numerals. In addition, each element in the drawing should be understood as not being drawn to scale.

1. Embodiment

1-1. Structure of X-ray Illumination Microscope

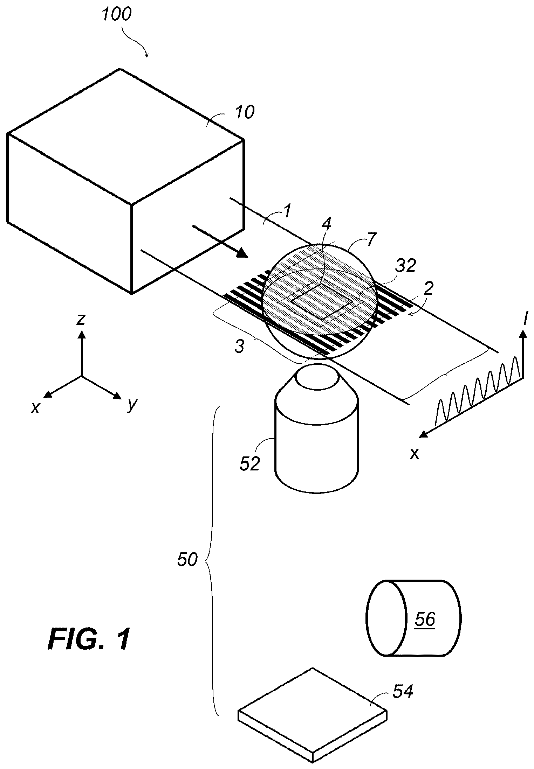

FIG. 1 is a perspective view showing a schematic diagram of an X-ray illumination microscope 100 in the present embodiment. The X-ray illumination microscope 100 of the present embodiment is provided with an X-ray irradiation unit 10 and an observation optical system 50, and while utilizing optical elements for existing optical microscopes for the observation optical system 50, the resolution of the observation optical system 50 is enhanced by the X-ray irradiation by the X-ray irradiation unit 10. The object to be observed 7 is illuminated by the patterned X-ray sheet beam 1. The patterned X-ray sheet beam 1 is generated by the X-ray irradiation unit 10 so as to have an intensity pattern 2. The intensity pattern 2 of the patterned X-ray sheet beam 1 repeats in at least a partial region 32 of a sheet area 3 having a spread that includes a first and a second directions. In the example shown in FIG. 1, the spread of the patterned X-ray sheet beam 1 is aligned with the xy plane, and the first and second directions mentioned above can be the x and y directions of Cartesian coordinates determined with respect to the object to be observed 7 and the observation optical system 50, for example. In this case, the sheet area 3 is the range of the spread of the patterned X-ray sheet beam 1 in the xy plane, and the partial region 32 is a part of such a sheet area 3. The partial region 32 can also be defined as a range in which intensity pattern 2 can be found in the patterned X-ray sheet beam 1. FIG. 1 shows the intensity pattern 2 of the patterned X-ray sheet beam 1 in a range wider than the partial region 32, with the strong positions indicated by long, narrow strips filled with black and the weak positions indicated by unfilled strips between them. That is, the intensity pattern 2 shown in FIG. 1 is a striped pattern that repeats in the x direction and extends in the y direction. In the present embodiment, the intensity of the intensity pattern including the stripe pattern is not necessarily a binary intensity or completely zero at weak positions. For this reason, the stripe pattern of the patterned X-ray sheet beam 1 includes a pattern in which the intensity repeatedly changes while changing the value with respect to the position in the x direction, as shown, for example, by the sinusoidal intensity I corresponding to the position in the x direction in FIG. 1. In the present embodiment, even if it is expressed as a stripe pattern, it is not limited to those that do not change at all in the y direction. The intensity distribution of the patterned X-ray sheet beam 1 in the z direction, which is orthogonal to both the x direction and the y direction, typically shows an intensity concentrated at a specific position. For this reason, although the patterned X-ray sheet beam 1 is sheet-like as a whole, it may have a finite thickness in the normal direction of the surface on which the intensity pattern 2 is formed.

The observation optical system 50 is provided to receive radiation of the observation wavelength from the observation area 4 and form an image in the optical wave region. The observation wavelength is not limited to a single wavelength but may be a wavelength range. The specific value of the observation wavelength is determined as appropriate according to the observation purpose and may be set by a filter or the like as necessary. For example, when the object to be observed 7 contains an X-ray excitable luminescent material 8 (not shown in FIG. 1), a wavelength range that overlaps with the emission wavelength of the luminescent material may be selected as the observation wavelength. The observation wavelength may be selected for the present embodiment from electromagnetic waves (hereinafter referred to as "observation light") of wavelengths suitable for observation, such as ultraviolet, visible, and infrared (including terahertz waves). If multiple types of X-ray excitable luminescent materials are adopted, the observation wavelength may be set to multiple wavelength ranges or to any wavelength contained therein. The observation optical system 50 typically includes an imaging optical system 52, such as an objective lens, and an imaging element 54. The observation optical system 50 may include optical elements not shown in FIG. 1, such as optical filters, mirrors, and relay lenses, as necessary.

The observation optical system 50 is arranged such that its optical axis is directed along a third direction (z-direction) orthogonal to both the first direction (x-direction) and the second direction (y-direction). The observation area 4 is a spatial range in which the observation optical system 50 is expected to form an image with its own resolving power. For this reason, the actual range of the observation area 4 depends on the specific design of the observation optical system 50. The observation area 4 is arranged so as to include at least a part of the above-mentioned partial region 32 in which the intensity pattern is repeated, that is, so as to overlap with the partial region 32.

1-2. Observation Area

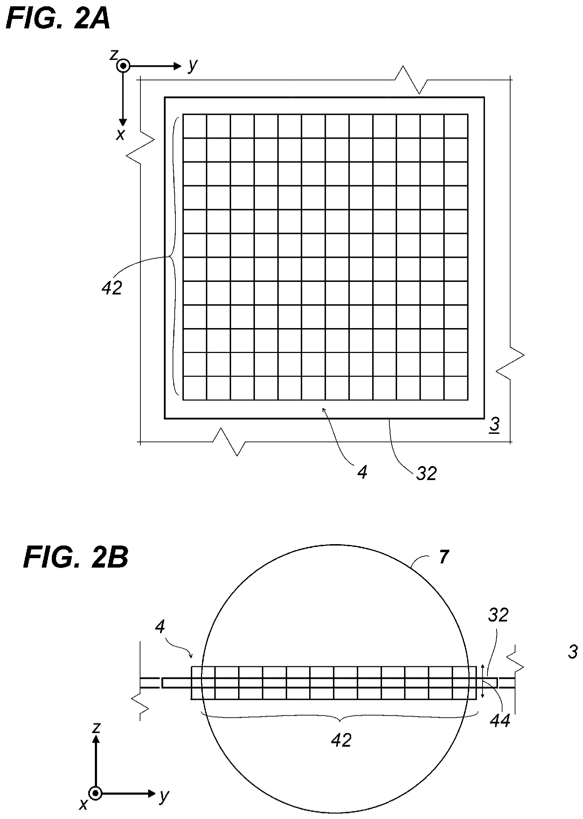

FIGS. 2A and 2B are schematic diagrams illustrating the relationship between a partial region 32 in the sheet area 3 and an observation area 4 in the present embodiment, and are a plan view (FIG. 2A) and an elevation view (FIG. 2B), respectively. The observation area 4 is defined by, for example, the thickness of the depth of field 44 in the direction of the optical axis (z direction) and the field of view 42 extending in the direction transverse to the optical axis, and typically is a flat plate-like area having the thickness and width. Here, the field of view 42 is the range in which an image is formed using the optical system of the observation optical system 50 and the light receiving element, or the range in which such an image is expected to be formed, and the observation area 4 is the area having a thickness near the object side image plane of the observation optical system 50. For example, the observation light can be in the ultraviolet, visible, or infrared (including terahertz waves) wavelength range, the observation optical system 50 can have an imaging optical system 52 and an imaging element 54, and the imaging element 54 can have a group of light receiving elements that form an array of pixels at the image position on the imaging optical system 52. In this case, observation light emitted from a certain range on the object side enters one of the light-receiving elements, forms an image, and the output data from multiple light-receiving elements become image data. In this case, the depth of field 44 is determined as the range within which observation light from positions within this range can be imaged with the desired resolution by the array of photodetectors, and observation light from positions outside this range is judged to be blurred. Therefore, either the size of the photodetectors or the diffraction limit of the observation optical system 50 determines the depth of field 44. It should be noted that the depth of field 44 is an indicator of the observation optical system 50 in terms of the wavelength of the observation light. In other words, the depth of field 44 defines the range along the optical axis where the observation optical system 50 can obtain an image with the resolution it is capable of without any issues. The depth of field 44 can also be defined as the range in the z-direction where the point spread function (PSF) has a value.

The object to be observed 7 typically contains X-ray excitable luminescent material. The X-ray excitable luminescent material is any material that emits observation light by means of any luminescence mechanism, including fluorescence and phosphorescence, when excited by X-rays. Examples include scintillating nanoparticles (SciNPs, also called scintillators), which contain microparticles such as $NaGdF_4$: Eu, $NaGdF_4$: Tb, $CsPbBr_3$, etc. In cases where the object to be observed 7 is biological tissue, X-ray excitable luminescent materials may accumulate specifically in microscopic regions within the tissue that are too small to be optically resolved, such as at the molecular level. When X-rays are irradiated onto such an object to be observed 7, which extends beyond the depth of field 44 of the observation optical system 50 and exhibits only gradual intensity changes within the depth of field 44, the resolution of the image obtained by the observation optical system 50 is determined by the performance of the observation optical system 50. However, in the X-ray illumination microscope 100 of the present embodiment and the conventional X-ray light sheet microscope (Non-Patent Document 2), since illumination is performed with X-rays that have better light-collecting properties than the observation light, the resolution in the optical axis direction (z direction) is determined based on the thickness of the patterned X-ray sheet beam (X-ray illumination microscope 100) or the X-ray light sheet (Non-Patent Document 2) as a guideline. To determine these thicknesses, indicators such as the value of the half-width at half-intensity may be adopted.

1-3. Patterned X-ray Sheet Beam

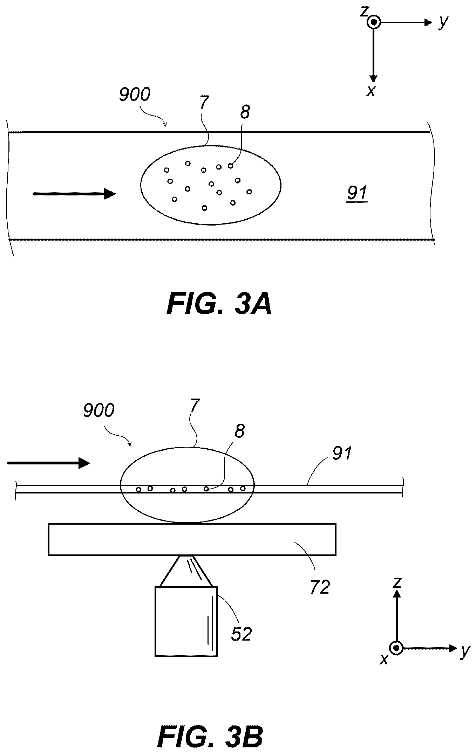

FIGS. 3A and 3B are a plan view (FIG. 3A) and an elevation view (FIG. 3B) showing a schematic structure of a sample (object to be observed) and X-ray illumination in a conventional X-ray light sheet microscope. These are a view of the relationship between the X-ray illumination and the object to be observed in a conventional X-ray light sheet microscope 900 as seen from the optical axis direction (FIG. 3A) and a view cut in a plane including the optical axis and the X-ray irradiation direction (FIG. 3B). The Cartesian coordinates are the same as those in FIG. 1. In the conventional X-ray light sheet microscope 900, a single layer of sheet-like X-ray sheet beam 91 is irradiated for X-ray illumination corresponding to the patterned X-ray sheet beam 1 in FIG. 1. The X-ray sheet beam 91 corresponds to the X-ray light sheet (Non-Patent Document 2). The X-ray sheet beam 91 has intensity only in a narrow range in the thickness direction, which is the optical axis direction (the z direction in FIGS. 3A and 3B) for the observation optical system 50, and shows almost no change in intensity in the direction perpendicular to the optical axis (the xy direction) within the scale of the observation range. For example, the object to be observed 7 contains an X-ray excitable luminescent material 8. As shown in FIG. 3B, in the X-ray light sheet microscope 900, a thin X-ray sheet beam 91 is irradiated at a position passing through the object to be observed 7 supported by the glass 72. Thus, even if the X-ray excitable luminescent material 8 is dispersed within the object to be observed 7, the illumination range for excitation for luminescence is limited to a very narrow range in the optical axis direction of the objective lens 52 of the observation optical system 50. If the thickness of the X-ray sheet beam 91 is thinner than the depth of field 44 shown in FIG. 2, two or more light-emitting points closer than the optical resolution limit in the z direction of the observation optical system 50 can be resolved, and super-resolution is performed. Looking at the detailed structure, as reported in Non-Patent Document 2, the X-ray sheet beam 91 has a concentrated portion in which the thickness is uniform over the position in the direction of propagation (y direction). This concentrated region has a range determined by the optical system generating the X-ray sheet beam in the y-direction and is generally spread out in the x-direction. Therefore, the intensity of the X-ray sheet beam 91 is uniform in the x-direction. By positioning the observation range of the observation optical system 50 near the center of this concentrated region, a good emission image of the X-ray excitable luminescent material 8 can be obtained. The thickness of the X-ray sheet beam 91 in the concentration region is approximately 65 nm (half-value full width) at its minimum, as reported in Non-Patent Document 2, and is less than 350 nm over a wide range of approximately 600 $\mu$m in the y-direction, sufficient to cover the observation field of view of the observation optical system 50. In other words, in the X-ray light sheet microscope 900, the thickness of the X-ray sheet beam 91 is narrowed to a range smaller than the optical depth of field in the optical axis direction of the observation optical system 50 (Non-proprietary document 2, Fig. 1a). In this way, super-resolution can be performed in the optical axis direction by utilizing the fact that the thickness of the X-ray sheet beam 91 is smaller than the depth of field of the objective lens 52 of the observation optical system 50. Specifically, the depth of field D is

$$D = n \, (0.61\lambda/(N.A.)^2)$$

where n is the refractive index of the lens medium (e.g., 1.52), $\lambda$ is the observation wavelength (e.g., 550 nm), and N.A. is the numerical aperture. For a 20$\times$ objective lens (NA = 0.7), the depth of field D is sub-micrometer, and for a 5$\times$ objective lens (NA = 0.15), the depth of field D is approximately 10 $\mu$m. However, in the conventional X-ray light sheet microscope 900, the resolution in the xy plane direction remains the same as that of the observation optical system 50.

1-3-1. Stripe Pattern

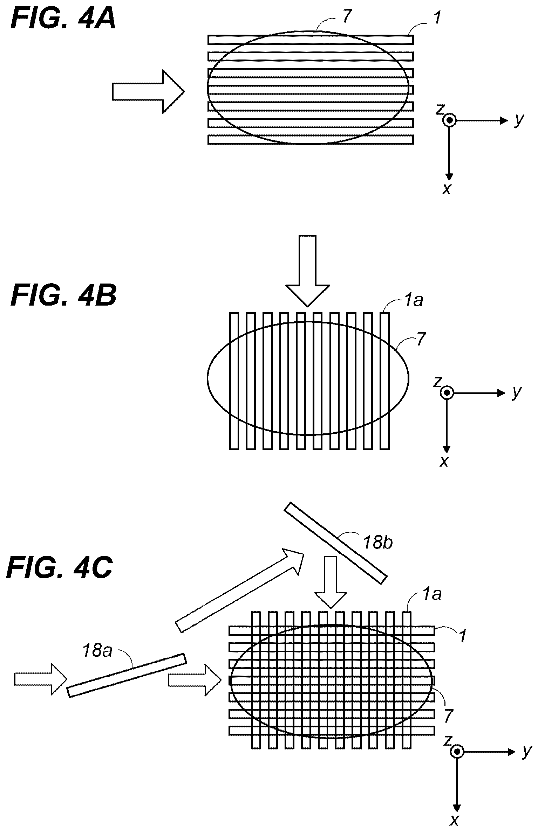

In contrast, in the X-ray illumination microscope 100 provided by the present disclosure, the patterned X-ray sheet beam 1 typically exhibits an intensity change in at least one direction (the x-direction in FIG. 1) as shown in FIG. 1. This point will be explained in more detail below. FIG. 4A shows a schematic structure of the patterned X-ray sheet beam 1 in the X-ray illumination microscope 100 of the present embodiment. The coordinates are the same as those in FIG. 1, and the intensity pattern of the patterned X-ray sheet beam 1 is the same as that in FIG. 1, but here the stripes are not black but are shown without coloring. In other words, in a typical example, the patterned X-ray sheet beam 1 shows an intensity pattern that repeats in the x direction and shows a change in the y direction that is similar to that of the X-ray light sheet microscope 900 described above. The patterned X-ray sheet beam 1 generally proceeds in the y direction, as indicated by the white arrows. In the X-ray illumination microscope 100, by utilizing the intensity pattern of the patterned X-ray sheet beam 1, it is possible to achieve super-resolution by increasing the resolution in one direction in the xy plane, i.e., in the x direction in FIG. 4A, which was not possible with the X-ray light sheet microscope 900. Other structures that can be performed by the X-ray illumination microscope 100 of the present embodiment are further described below.

In the present embodiment, the direction in which the patterned X-ray sheet beam is irradiated toward the object to be observed 7 and the observation optical system 50 can be freely selected. FIG. 4B shows an embodiment of the X-ray illumination microscope of the present disclosure, which is arranged to have a stripe pattern repeating in the y direction. As shown here, the patterned X-ray sheet beam 1a is arranged so that its relative directional relationship with the object to be observed 7 is changed by 90° in the xy plane from that shown in FIG. 4A and has an intensity pattern in the y direction. In this case, the direction in which the patterned X-ray sheet beam 1a travels is the x direction, which is generally the direction in which the stripe pattern extends, as indicated by the white arrows. In the patterned X-ray sheet beam 1 in FIG. 1 and FIG. 4A, the intensity of the X-rays has an intensity pattern that repeats in the x direction and extends in the y direction. In contrast, in the patterned X-ray sheet beam 1a in FIG. 4B, the intensity pattern of the X-rays extends in the x direction and repeats in the y direction, thereby enabling the resolution in the y direction to be increased. FIG. 4C shows a structure that can increase the resolution in both the x direction and the y direction. In FIG. 4C, X-ray mirrors 18a and 18b are added to the structure shown in FIG. 4A to reflect X-rays. These X-ray mirrors 18a and 18b have the function of directing the propagation direction of the patterned X-ray sheet beam 1 in the x direction at the position of the object to be observed 7, and are inserted into the X-ray path as necessary. As shown in FIG. 4C, at one timing, the patterned X-ray sheet beam 1 is irradiated as shown in FIG. 4A, and at another timing, the X-ray mirrors 18a and 18b are inserted into the optical path to irradiate the patterned X-ray sheet beam 1a as shown in FIG. 4B. In this way, if it is possible to irradiate the object to be observed 7 by changing the relative direction between the stripe pattern in the xy plane and the object to be observed 7, super-resolution can be achieved for two-dimensional coordinates in the xy plane while fixing the relative arrangement between the object to be observed 7 and the observation optical system 50 (not shown in FIGS. 4A to 4C). In other words, even if the intensity pattern of the patterned X-ray sheet beam has a one-dimensional stripe structure, super-resolution can be achieved with respect to two-dimensional coordinates in the xy plane. Therefore, in combination with the increased resolution in the z direction, super-resolution can be achieved in all directions by using the patterned X-ray sheet beam of the present embodiment.

1-3-2. Two-dimensional Lattice Pattern

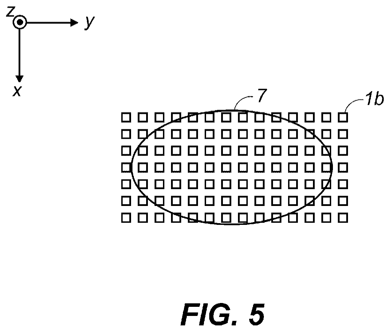

The patterned X-ray sheet beam in the X-ray illumination microscope of the present embodiment is not limited to those having a one-dimensional structure in the xy plane as shown in FIGS. 4A and 4B, or those shown in FIG. 4C, which are combinations of these at different timings. FIG. 5 is an explanatory diagram showing a two-dimensional lattice pattern that can be another example of a patterned X-ray sheet beam in the X-ray illumination microscope of the present embodiment. The two-dimensional lattice pattern of the patterned X-ray sheet beam 1b has intensity variations that repeat in both the x direction (one direction within the xy plane) and the y direction (a direction within the xy plane that is not parallel to the x direction). By adopting such a two-dimensional lattice pattern, super-resolution can be achieved for two-dimensional coordinates in the xy plane while fixing the relative position between the object to be observed 7 and the observation optical system 50. Since super-resolution can be achieved for two-dimensional coordinates in the xy plane, super-resolution can be achieved in all directions in combination with the increased resolution in the z direction. The two-dimensional lattice pattern of the patterned X-ray sheet beam 1b shown in FIG. 5 is a square lattice pattern for the sake of example, and the two-dimensional lattice pattern for the patterned X-ray sheet beam 1b in the present embodiment includes other lattice patterns that can be freely selected.

1-3-3. Multi-layer Pattern

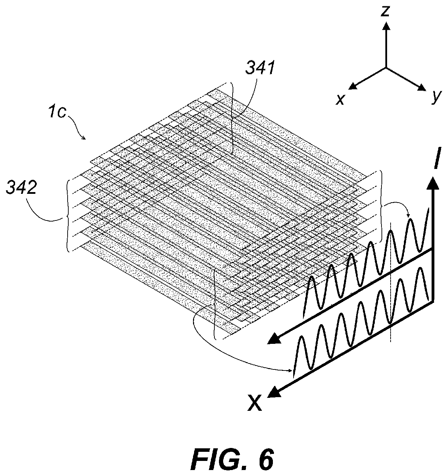

Furthermore, the patterned X-ray sheet beam in the X-ray illumination microscope of the present embodiment may be a sheet beam multilayered over the thickness direction. FIG. 6 is a perspective view showing an example of a patterned X-ray sheet beam 1c in which the intensity pattern is a multilayer pattern in an X-ray illumination microscope. The exemplary multilayer pattern includes a plurality of single sheet areas 341 and 342 in which a stripe pattern with intensity changes repeating in one direction (x direction) in the xy plane is formed. Each of the single sheet areas 341 and 342 has a spread parallel to the xy plane and is oriented so that its normal direction (or z direction, thickness direction) extends across both the x direction and the y direction, and the single sheet areas are separated from each other. Each of single sheet areas 341 and 342 corresponds to each layer of the multilayer pattern, and here they are referred alternatingly to as odd and even layers. In a partial region of each single sheet area 341 and 342, an intensity pattern of a stripe pattern extending repeatedly in the x direction and extending in the y direction, as shown in FIG. 4A, is performed. As shown in FIG. 6, when one of the single sheet areas 341 and 342 is selected and projected onto the other in the thickness direction, the stripe patterns of the single sheet areas 341 and 342 can be arranged relative to each other so that they are offset in the direction of repetition of the stripes (x direction). FIG. 6 shows, by a graph of intensity I against x, that the intensity pattern of a single sheet area 341 and the intensity pattern of another single sheet area 342 adjacent thereto in the thickness direction have increase and decrease patterns reversed with respect to the x direction. For convenience of drawing, in FIG. 6, the range indicating the strength of each stripe of the stripe pattern is represented as a strip having width but no thickness, and the strength patterns of each single sheet area are represented by stripes arranged in parallel in the xy plane. In addition, in order to clarify the three-dimensional arrangement, a sand pattern is applied to each strip forming the stripes. In actual multilayer patterns, the intensity is determined as a function of position in the xy plane and in the z direction, and the intensity values can take continuous values. An intensity that is a sinusoidal wave with respect to the z axis is also an example of a multilayer pattern of the present embodiment.

The increase and decrease patterns of the single sheet areas 341 and 342 shown in FIG. 6 can be said to have a relative arrangement in which the odd- numbered single layer patterns 341 and even-numbered single layer patterns 342 of the laminated single layer patterns are shifted from each other with respect to the direction of repetition of the intensity patterns when projected over the thickness direction of the laminated single layer patterns. The inversion of the pattern shown in FIG. 6 can be expressed as a shift of 1/2 of the repetition period in the x direction with respect to the periodic intensity variation in the single sheet areas 341 and 342. Alternatively, the multilayer pattern shown in FIG. 6 can be described as having a repetition period of intensity that is reversed between single sheet areas that are adjacent in the z direction with respect to the periodic intensity variation in the single sheet areas 341 and 342. In yet another expression, the multi-layer pattern shown in FIG. 6 can be expressed as the repetition of the intensity in the z direction being reversed in adjacent single sheet areas with respect to the periodic intensity variation in the single sheet areas 341 and 342. In FIG. 6, the combination of intensity patterns of single sheet areas is shown to have two shift positions in which the shift amount of the repetition period in the x direction is 1/2. However, in the present embodiment, intensity patterns with shift amounts different from this may be adopted, or combinations of intensity patterns of single sheet areas with a shift amount of 0 may be adopted.

1-4. Generation of Patterned X-ray Sheet Beam

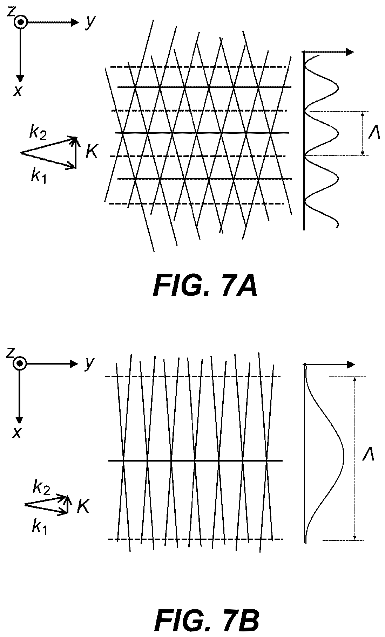

Next, the method for generating the various patterned X-ray sheet beams described above will be explained. FIGS. 7A and 7B are explanatory diagrams illustrating the generation of a stripe pattern by interfering X-ray sheet beams (first and second X-ray sheet beams) in a crossed arrangement, showing cases where the crossing angle is large (FIG. 7A) and small (FIG. 7B). The X-rays are preferably sheet beams that are monochromatic, linearly polarized, and coherent (interferable) in one direction, such as those generated at a synchrotron radiation facility. As shown in, for example, Non-Patent Document 2, a method of generating sheet beams is known in which the beams are passed through a slit or the like and then narrowed over the thickness direction by a Wolter mirror or the like. From at least one X-ray sheet beam generated in this manner, two sheet beams (first and second X-ray sheet beams) are generated while maintaining their coherence with each other. These two sheet beams have the same wavelength and both have the z direction as the thickness direction. Unless otherwise specified, the direction in which they are narrowed is referred to as the z direction and is also referred to as the thickness direction. FIGS. 7A and 7B schematically show the interference fringes and the intensity changes in the x direction in cases where the first and second X-ray sheet beams form a large angle and a small angle, respectively. The wave number vectors of the first and second X-ray sheet beams are denoted as k1 and k2, respectively. Although they are vectors, arrows and bold type are omitted for simplicity. The grating vector K that defines the interference fringes satisfies K = k2 - k1. Here, $\Lambda$, which satisfies $|K| = 2\pi/\Lambda$, gives the pitch (period of the strong-weak pattern) of the interference fringes as a grating. When the first and second X-ray sheet beams have no curvature and the sum of vectors $k_1$ and $k_2$ points along the y-axis, the X-ray intensity after interference remains constant along a line parallel to the y-axis. In this case, following the x direction, the X-ray electric field forms interference fringes with strong and weak intensities at the positions of constructive and destructive interference indicated by the solid and broken lines, respectively. The intensity pattern period $\Lambda$ can be easily controlled by the directions of vectors k1 and k2, i.e., the angles of the first and second X-ray sheet beams, as shown in FIGS. 7A and 7B. The pitch of the interference fringes can also be changed by changing the wavelength of the X-rays. Here, we have explained the principle of forming a stripe pattern using two light beams, but a two-dimensional lattice pattern can be performed by using interference with three light beams.

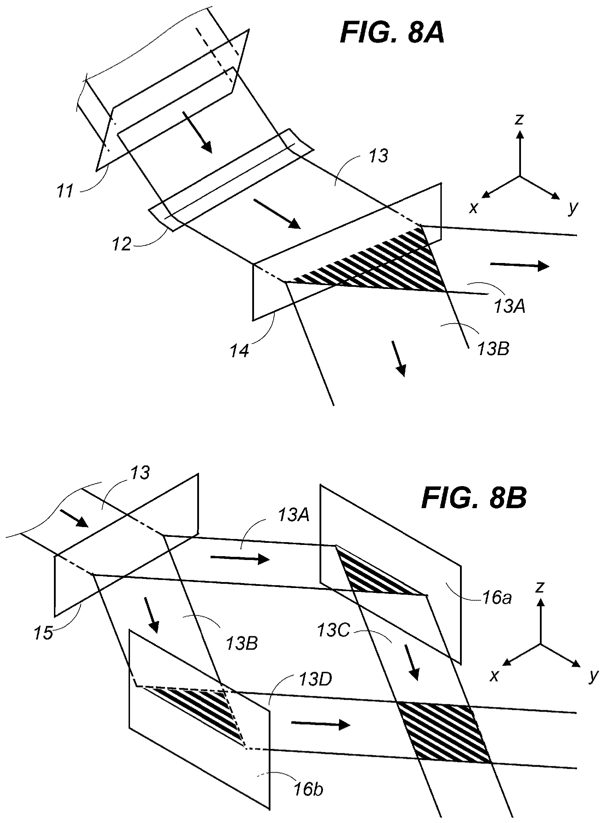

FIGS. 8A and 8B are structural diagrams showing examples of X-ray irradiation units that generate intensity patterns of patterned X-ray sheet beams in the present embodiment, and show more specific structures of X-ray irradiation units for generating the intensity patterns shown in FIGS. 7A and 7B by interference. FIG. 8A is a perspective view showing an example of a configuration of an X-ray irradiation unit 10 that generates an intensity pattern 2 by using an X-ray convergence element (X-ray converging unit) 12 and a diffraction grating 14. The X-ray converging unit 12 narrows the thickness of the X-rays emitted from the X-ray source and passing through the slit of the X-ray limiting element 11. This narrowed thickness is the spread in the direction corresponding to the slit width of the X-ray limiting element 11, and corresponds to the thickness in the Z direction of the sheet-like X-ray sheet beam 13. The X-ray converging unit 12 may be configured as a one-dimensional Walter mirror reflection optical system combining a hyperbolic mirror having a surface that is a hyperbola in the y-z plane and has no curvature in the x direction, and an elliptical mirror having a surface that is a parabola in the y-z plane and has no curvature in the x direction. In this way, the X-ray converging unit 12 in the present embodiment is not limited to a single element, but may also be structured by combining multiple X-ray optical elements. The X-ray sheet beam 13 generated in this way is a traveling wave that spreads within a plane, has thickness in the normal direction of the plane, and propagates in one direction within the plane. The X-ray sheet beam 13 at this step has a uniform intensity with almost no intensity variation in the xy plane within the range of the X-ray sheet beam, and maintains the coherence and polarization derived from the X-ray source. A typical example of an X-ray source that maintains the coherence and the polarization is synchrotron radiation. The X-ray sheet beam 13 is a sufficiently thin sheet beam such that, for example, if it is propagated as is, the thickness of the beam waist portion is approximately 65 nm, and corresponds to the X-ray sheet beam 91 shown in FIG. 3A and 3B.

Next, all or part of the X-ray sheet beam 13 is incident onto a diffraction grating 14 disposed in its optical path. The diffraction grating 14 may be a crystal having a lattice constant corresponding to the period of X-ray diffraction. Passing through the diffraction grating 14 causes at least a part of the X-ray sheet beam to change direction, which can cause interference. In other words, since diffraction occurs when at least two X-ray sheet beams whose directions have been changed while maintaining coherence are directed toward the same space, the range of the patterned X-ray sheet beam becomes the freely illuminated position by both of the at least two X-ray sheet beams. In this way, the effect of the diffraction grating 14 enables the generation of a patterned X-ray sheet beam having an intensity pattern as shown in FIG. 1 and FIG. 4A. FIG. 8A shows how two X-ray sheet beams 13A and 13B interfere immediately after passing through the diffraction grating 14 to form a stripe pattern. The diffraction grating 14 may be, for example, a $\pi$ phase grating.

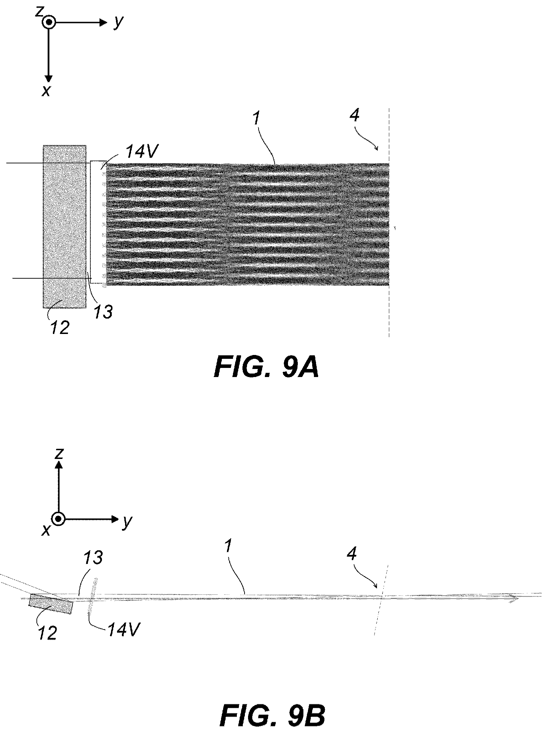

FIGS. 9A and 9B are a plan view (FIG. 9A) and a cross-sectional view (FIG. 9B) showing a patterned X-ray sheet beam in the present embodiment as a specific structure in which a stripe pattern is performed by the Talbot effect of a phase diffraction grating. FIG. 9A shows a structure that uses a diffraction grating 14V with artificially uneven stripes formed on a flat plate made of a material with the X-ray refractive index different from 1, and the pattern produced thereby. The diffraction grating 14V may be a transmissive phase diffraction grating with stripes arranged to produce an X-ray phase advance of $\pi/2$ or $\pi$. The diffraction grating 14V shown here has the stripe pattern that gives the phase advance directed toward the thickness direction of the X-ray sheet beam (the z direction in FIGS. 9A and 9B), and the X-ray sheet beam passes through the thickness direction (the y direction) of the flat plate-shaped transmissive diffraction grating. By using such a diffraction grating 14V, as shown in FIG. 9A, a pattern in which the intensity periodically changes in the x direction due to the Talbot effect is realized in a partial region (not shown in FIG. 9A) of the sheet area of the patterned X-ray sheet beam 1, and the observation area 4 can be arranged so as to include the pattern. In the patterned X-ray sheet beam 1 in FIGS. 9A and 9B, the intensity of the X-rays is expressed as shades, with darker areas having higher intensity. In addition, as shown in FIG. 9B, the thickness of the patterned X-ray sheet beam in the z direction of the sample position can be, for example, about 60 nm. The Talbot effect is a phenomenon in which the self-image formed by the interference of light beams diffracted by a diffraction grating 14V has an intensity pattern that increases and decreases within the diffraction plane (xy plane direction). The intensity pattern in the x direction is obtained by a cycle of intensity increase and decrease equal to half the pitch d of the stripes of the diffraction grating, d/2, in the case of a $\pi$ phase grating. 2. In principle, it is possible to create interference fringes with high contrast, where the visibility is close to 1, using the self-image of the diffraction grating. By setting the rise of the bright regions to less than several tens of nm and performing measurement techniques that scan the interference fringes, super-resolution performance can be achieved. Additionally, in the intensity pattern of the diffracted patterned X-ray sheet beam, positions in y where the intensity increases or decreases clearly and positions where the intensity changes are unclearly appear alternately, for example, in the case of an amplitude grating, at periods of $d^2/\lambda$ (where $\lambda$ is the wavelength of the X-rays). Therefore, it is useful to select the observation area 4 at a precisely set position as shown in the figure, and the phase diffraction grating 14V shown in FIGS. 9A and 9B are examples of the diffraction grating 14 shown in FIG. 8A.

For the patterned X-ray sheet beam 1 of the present disclosure, it is possible to adopt the structure shown in FIG. 8B. FIG. 8B is an example of the structure of an X-ray irradiation unit 1 that adopts an X-ray branching element(X-ray branching unit) 15 and an X-ray interference unit. FIG. 8B shows at least two X-ray sheet beams 13A and 13B, which are generated by branching due to the action of an X-ray branching element 15, which may be a diffraction grating or a partially reflective mirror, and are again interfering with each other due to the action of X-ray interference units 16a and 16b, which may be mirrors. In this case, in addition to the X-ray converging unit 12 (not shown in FIG. 8B), an X-ray branching element (X-ray branching unit) 15 is provided in the optical path of the X-ray sheet beams 13. The X-ray branching element 15 generates the first X-ray sheet beam 13A and the second X-ray sheet beam 13B, which are both narrowed in one direction, and FIG. 8B shows the separation by a diffraction grating. In addition to the above, a mirror that deflects only a part of the width direction of the X-ray sheet beam 13 may be used as the X-ray branching element. The first X-ray sheet beam 13A and the second X-ray sheet beam 13B are further adjusted in direction by the X-ray interference units 16a and 16b to become the first X-ray sheet beam 13C and the second X-ray sheet beam 13D, respectively, and are interfered again to form patterned X-ray sheet beams with a stripe pattern. FIG. 8B shows the reflection by mirrors as X-ray interference units 16a and 16b. The X-ray branching unit in the present embodiment is not limited to a single element such as the X-ray branching element 15, but may also be structured by combining a plurality of X-ray optical elements. As shown in FIG. 8B, due to the difference in the directions of the beams before and after incidence, the mirrors have the effect of generating patterns by interference fringes near their own reflection surfaces. The interference of X-rays before and after reflection at such reflection surfaces can also be used to form patterns in the present embodiment.

In addition, for the two-dimensional lattice pattern shown in FIG. 5, in addition to the Talbot effect shown in FIG. 9A, three or more X-ray sheet beams can be generated by the X-ray branching unit and caused to interfere with each other.

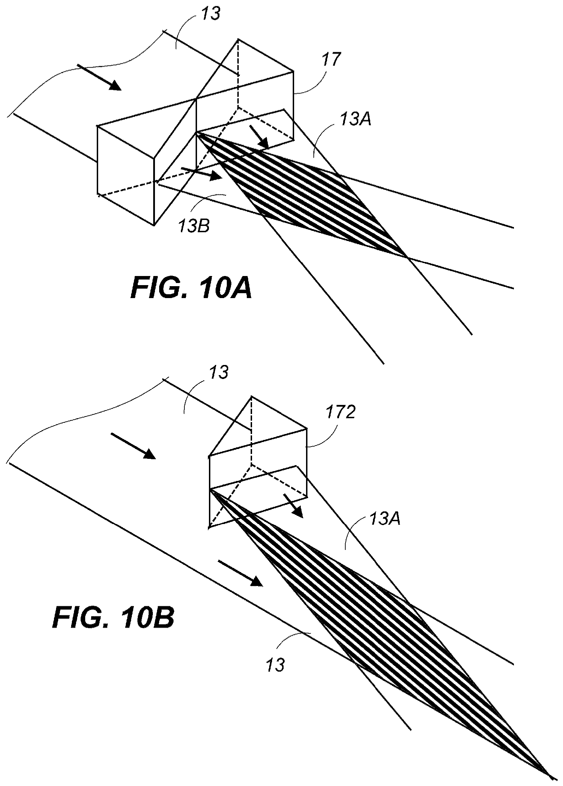

The interference in the present embodiment can also be performed by a wavefront dividing interference method using prisms. FIGS. 10A and 10B are structural diagrams showing a structure in which two X-ray sheet beams are interfered by wavefront dividing interference using prisms in the present embodiment, and are two X-ray sheet beams produced by two prisms (FIG. 10A) and two X-ray sheet beams produced by one prism (FIG. 10B). The patterned X-ray sheet beam 1 of the present disclosure may also adopt the structure shown in FIG. 10A. In addition to the X-ray converging unit 12 (not shown in FIG. 10A), an X-ray prism 17 is provided in the optical path of the X-ray sheet beam. The X-ray prism 17 generates at least one of a first X-ray sheet beam 13A and a second X-ray sheet beam 13B that propagate non-parallel to each other, and in FIG. 10A, a structure in which the thickness to be passed through differs depending on the position in the x direction is shown. The patterned X-ray sheet beam 1 of the present disclosure may also adopt the structure shown in FIG. 10B. In other words, a patterned X-ray sheet beam 1 may adopt a structure in which only a part of the X-ray sheet beam 13 having a width is deflected by the X-ray prism 172 to form the first X-ray sheet beam 13A, and the other part of the X-ray sheet beam 13 that is not deflected interferes with the first X-ray sheet beam 13A. In materials whose refractive index is less than 1 with respect to X-rays, the light beam is refracted to the opposite side of the light prism, as shown in FIGS. 10A and 10B.

In addition, for the two-dimensional lattice pattern shown in FIG. 5, in addition to the prism shown in FIGS. 10A and 10B, three or more X-ray sheets can be generated by a prism or diffraction grating and caused to interfere with each other. In this case, an X-ray converging element (X-ray converging unit) is provided in the optical path of X-rays emitted from an X-ray source and passing through a slit, such that at least one X-ray sheet beam is generated in a direction narrowed in at least one direction. Furthermore, an X-ray branching element is provided in the optical path of the X-ray sheet beams, generating at least one of a first X-ray sheet beam, a second X-ray sheet beam, and a third X-ray sheet beam that are narrowed in a certain direction. When the first X-ray sheet beam, the second X-ray sheet beam, and the third X-ray sheet beam are directed by the X-ray interference unit so as to propagate non-parallel to each other, a patterned X-ray sheet beam having a two-dimensional lattice pattern is generated by interference.

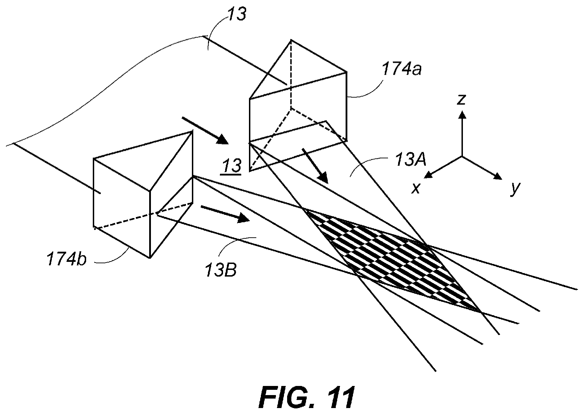

FIG. 11 is a structural diagram showing a structure in which three X-ray sheet beams are interfered by wavefront dividing interference using prisms in the present embodiment. The X-ray irradiation unit is provided with an X-ray converging unit (not shown) and X-ray prisms 174a and 174b. The X-ray converging unit is the same as that shown in FIG. 8A, for example. The X-ray prisms 174a and 174b are provided in the optical path of the generated X-ray sheet beams 13 and generate at least one of the first X-ray sheet beam 13A, the second X-ray sheet beam 13B, and the third X-ray sheet beam 13, which are narrowed in a certain direction. The first to the third X-ray sheet beams 13A, 13B, and 13, which are non-parallel to each other, propagate in a mutually non-parallel manner. As a result, a patterned X-ray sheet beam having a two-dimensional lattice pattern is generated by interference.

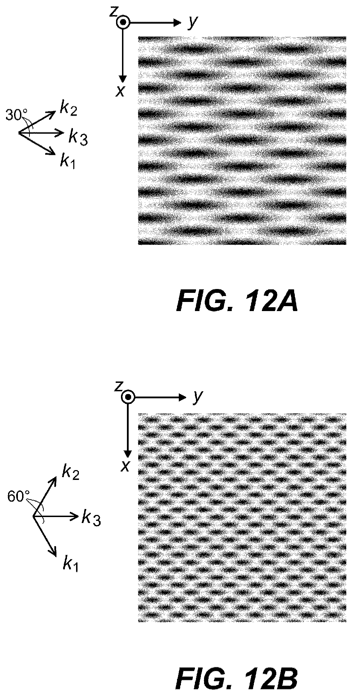

FIGS. 12A and 12B are schematic diagrams showing calculation examples of interference patterns by three X-ray sheet beams. The calculations were performed under conditions where three light waves of equal intensity were interfered, and the wavelength was fixed and the crossing angle of the light waves was changed in FIG. 12A (crossing angle '30° ) and FIG. 12B (crossing angle 60° ). ~The arrangements of the first, second, and third X-ray sheet beams 13A, 13B, and 13 in FIG. 11 are shown in each figure when the wave number vectors of the first, second, and third X-ray sheet beams are set to k1, k2, and k3, respectively. The schematic patterns shown in FIG. 11 can be realized as the intensity patterns shown in FIGS. 12A and 12B. It was confirmed that the larger the crossing angle, the smaller the spatial period of the pattern becomes, resulting in a finer pattern. In this way, it is possible to generate a two-dimensional lattice pattern by interfering three X-ray sheet beams.

It is also possible to generate two-dimensional grating patterns such as those shown in FIGS. 12A and 12B using a diffraction grating. In this case, it is effective to adopt a diffraction grating in which the depth profile is non-rectangular, etc., so that the multi-wave interference conditions are adjusted, at the position of the diffraction grating 14 in FIG. 8A. In addition, the pattern produced by the Talbot effect of the phase diffraction grating shown in FIG. 9A shows not only a repetitive intensity change in the x direction but also an intensity change in the y direction, and therefore, by adjusting the structure of the phase diffraction grating, it can be applied to produce the two-dimensional lattice patterns shown in FIGS. 12A and 12B.

1-5. Principle of Super-Resolution

1-5-1. Principle of Super-Resolution in the Thickness Direction

Super-resolution in the optical axis direction (z direction) is achieved in the X-ray illumination microscope 100 and the X-ray light sheet microscope 900 because the thickness (width in the z direction) of the patterned X-ray sheet beam 1 and the X-ray sheet beam 91 is smaller than the depth of field 44 (FIG. 2). In other words, the X-ray illumination microscope 100 also reflects the property of the X-ray sheet beam being able to focus in the thickness direction. If the sheet area 3 shown in FIG. 2B is micro-moved in the z direction, for example by using a piezo element, within the range of the depth of field 44, the z coordinate of the patterned X-ray sheet beam 1 irradiated onto the object to be observed 7 can be changed. In this case, even if the relationship between the object to be observed 7 and the observation optical system 50 is fixed, excitation by X-rays is performed only in the range included in the sheet area 3, not in the entire depth of field 44, so that differences in the light emission intensity due to minute positions of the X-ray excitable luminescent material can be observed. For this purpose, it is desirable that the X-ray illumination microscope 100 be further provided with a relative position shifting unit (not shown) that changes the relative position between the sheet area 3 and the object to be observed 7 to include a displacement in the normal direction of the sheet area 3. By taking images with the observation optical system 50 at each position where micro-motion is performed and reconstructing a volume image using the multiple images taken, super-resolution exceeding the resolution limit of the observation optical system 50 in the optical axis direction is achieved.

1-5-2. Example of Super-Resolution within a Plane

In the X-ray illumination microscope 100, super-resolution can be achieved in the xy plane by using the intensity pattern 2 of the patterned X-ray sheet beam 1. As shown in FIGS. 4A to 4C, if super-resolution is achieved in one direction within the xy plane in which the intensity pattern is present, super-resolution can in principle also be achieved in other directions within the xy plane. Furthermore, the principle of super-resolution that is established for the stripe pattern for the patterned X-ray sheet beam is also applied to patterned X-ray sheet beams with patterns other than stripes. Here, we explain how to achieve super-resolution based on a fringe scanning calculation algorithm called PMI (Phase Measurement Interferometry, Non-Patent Document 3) for the case of adopting a stripe pattern that extends in the y direction and has intensity variations of a sinusoidal wave repeating in the x direction (FIGS. 1 and 4A).

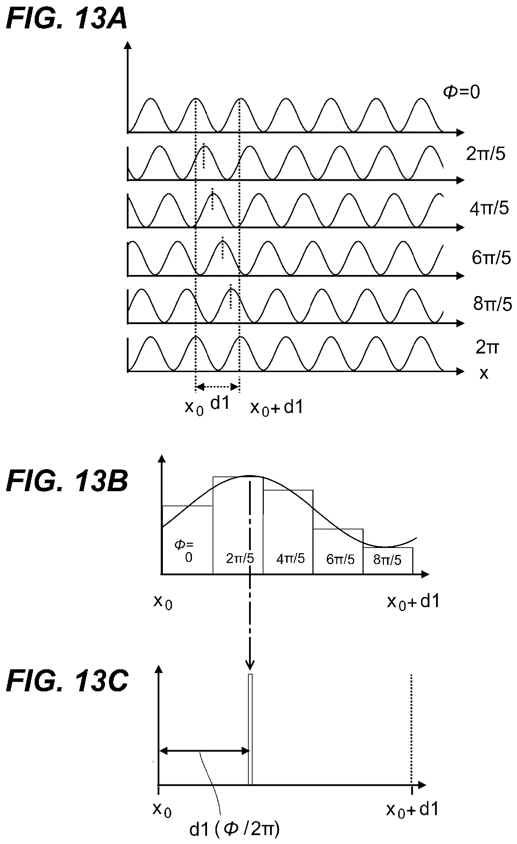

FIGS. 13A to C are explanatory diagrams illustrating the situation assumed in the super-resolution algorithm for precisely determining the position of light-emitting points excited by illumination with a patterned X-ray sheet beam 1 having a stripe pattern. FIG. 13A is a graph showing the shift of the X-ray intensity pattern, FIG. 13B is a graph showing the amount of light obtained by shifting the phase of the pattern, and FIG. 13C is a graph showing the position of the image obtained by super-resolution within the period of the X-ray intensity pattern. and a graph showing the positions of images obtained by super-resolution within the period of the X-ray intensity pattern (FIG. 13C). FIG. 13A shows the intensity of a sinusoidal wave produced by the patterned X-ray sheet beam 1, with the x-coordinate on the horizontal axis and the intensity of the sinusoidal wave on the vertical axis, and shows how the patterned X-ray sheet beam 1 is shifted with respect to the x-coordinate. Note that the x-coordinate is fixed relative to the object to be observed 7. In the ideal stripe pattern of the patterned X-ray sheet beam 1, the relative configuration of the intensity changes and the observed object to be observed 7 (i.e., the x-coordinate) can be specified by a phase $\varphi$ with a domain of 0 to $2\pi$, corresponding to one cycle of the repetition of its own intensity changes. This phase $\varphi$ is not the phase of the electromagnetic wave itself, which is a wave of electric and magnetic fields, but the phase expressed by the intensity (electromagnetic wave) pattern as a wave. FIG. 13A shows the intensity when the phase $\varphi$ is 0, $2\pi/5$ (= 72°), $4/5\pi$, ..., $2\pi$. The cases where the phase $\varphi = 0$ and the phase $\varphi = 2\pi$ are indistinguishable. This change in phase $\varphi$ corresponds to shifting the stripe pattern in the x direction within the range of the X-ray intensity period d1. The X-ray intensity period d1 is the same as the intensity pattern period $\Lambda$ (FIGS. 7A and B) in the stripe pattern. The light emission points whose positions are unknown in the range between $x_0$ and $x_0 + d1$ change their light emission intensity with respect to phase $\varphi$ as shown in the bar graph in FIG. 13B when the patterned X-ray sheet beam 1 is shifted with respect to the x-coordinate. The curve in FIG. 13B is a sinusoidal wave that explains this change at a finite number of sample points of phase $\varphi$. This sinusoidal wave can be considered a curve that approaches the actual curve as the number of phase $\varphi$ samples increases. Therefore, it is reasonable to determine this sinusoidal wave accurately from the finite number of light intensity samples (bar graph values) and to consider that the phase $\varphi$ corresponding to the peak position of this sinusoidal wave corresponds to the position of the light-emitting point between $x_0$ and $x_0 + d1$. Here, the horizontal axis of FIG. 13B is the phase $\varphi$ itself, which corresponds to the range between $x_0$ and $x_0 + d1$, and is indicated in accordance with the figure. In other words, as shown in FIG. 13C, the light emission points must exist at one of the positions between $x_0$ and $x_0 + d1$, and assuming that the intensity of the X-rays at that position is reflected in the light intensity of the bar graph in FIG. 13B, it is possible to determine the position of the light emission point in more detail than in the range of $x_0$ and $x_0 + d1$.

The shift in the intensity pattern that changes the phase $\varphi$ can be performed by slightly moving the position of the patterned X-ray sheet beam 1 while fixing the object to be observed 7 and the imaging optical system 50, or by slightly moving the intensity pattern 2 within the patterned X-ray sheet beam 1 while fixing the positions of the object to be observed 7, the imaging optical system 50, and the entire patterned X-ray sheet beam 1. These minute movements can be performed without any particular problems using existing means that are controllable and capable of achieving minute displacements, such as piezo elements. Furthermore, the minute movement of intensity pattern 2 within the patterned X-ray sheet beam 1 can be performed using various methods, such as inserting an object with a refractive index strictly different from 1, rotating the object to change the optical path length, or rotating the diffraction grating 14 relative to the X-ray sheet beam 1. Therefore, a functional component that can shift patterns (pattern shifter) includes freely selectable mechanical elements capable of performing displacement and optical path length changes and freely selectable optical elements. In particular, when the pattern shifter does not change the relative positions of the observation area 4 of the observation optical system and the object to be observed 7, the position of the object to be observed 7 does not change in the multiple element images acquired by the imaging optical system 50, which facilitates subsequent processing.

This algorithm is explained using mathematical expressions. As described above, the intensity of the observation light is measured by shifting the stripe pattern, which repeats in the x direction, in the direction of repetition. Considering the fact that an X-ray sheet beam focused in a sufficiently narrow range in the z direction is used, the algorithm for estimating the sinusoidal wave in FIG. 13B above corresponds to calculating the following equation,

[Math 1]

$$C_1(x,z) = \sum_{i=0}^{N_1-1} I_i(x,z)\cos(2\pi\frac{i}{N_1}) \qquad (1.1)$$

$$S_1(x,z) = \sum_{i=0}^{N_1-1} I_i(x,z)\sin(2\pi\frac{i}{N_1}) \qquad (1.2)$$

$$\phi(x,z) = \tan^{-1}(S_1(x,z)/C_1(x,z)) \qquad (1.3)$$

where $I_i(x, z)$ is the intensity observed at each sample position $(x, z)$ at the shift position identified by suffix i (i is 0 or more and $N_1$-1 or less, and $N_1$ is 3 or more), and determining $\varphi(x, z)$, i.e., $\tan^{-1}(S_1/C_1)$ (Equation (1.3)). Based on this value, more precise position in the range of $x_0$ and $x_0$ + d1 can be derived by calculating d1 $\times$ [$\varphi(x, z)/2\pi$], i.e., d1 x $\tan^{-1}(S_1/C_1)/2\pi$ as shown in FIG. 13C. In other words, as explained in FIGS. 13A to C, determining the sinusoidal wave in FIG. 13B from the sample intensities (bar graph) of the observation light in FIG. 13B obtained by each phase $\varphi$ in FIG. 13A, and then determining the position of the peak corresponds to calculating the phase $\varphi$ according to Equation (1.3) by assuming $N_1$ as 5 in Equations (1.1) and (1.2). This is then mapped to the position between $x_0$ and $x_0$ + d1, i.e., within the period d1. To resolve in the z-direction, the relative z-direction configuration between the patterned X-ray sheet beam 1 and the observation target 7 is moved, and the peak position is identified by determining the intensity variation with respect to the displacement.

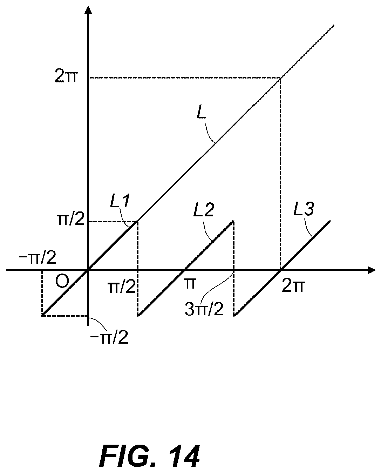

Here, when the value of $\tan^{-1}$ is calculated according to equation (1.3), the phase $\varphi$ is folded within a range of ($-\pi/2$ to $\pi/2$). To solve this, phase correction (unwrapping calculation) by an integer multiple of $\pi$ is necessary. FIG. 14 is an explanatory diagram showing the concept of phase correction by this unwrapping calculation. The groups of straight lines L1 to L3 show the phase (vertical axis) obtained as the value of $\tan^{-1}$ with respect to the phase (horizontal axis) that corresponds to the distance in real space (FIG. 13C). As shown in the range of the vertical axis of the groups of straight lines L1 to L3, only values from $-\pi/2$ to $\pi/2$ can be obtained from the value of $\tan^{-1}$. Therefore, to determine the phase corresponding to the range of one fringe, such as 0 to $2\pi$, it is necessary to determine which of the lines in the line groups L1 to L3 the obtained value of $\tan^{-1}$ corresponds to and then map it to the line L corresponding to the phase 0 to $2\pi$ in real space. Additionally, when determining the phase in this manner, a reference particle indicating the origin position can be selected. The integer used for this phase correction corresponds to twice the number obtained by adding one to the number of fringes between the reference particle and the particle whose phase is to be determined, or to the number obtained by subtracting one from that value.

If super-resolution for the x-coordinate can be performed by the above method, super-resolution can be performed separately for the x-direction and the y-direction, as shown in FIGS. 4A to 4C.

Next, we will explain the method using the two-dimensional lattice pattern shown in FIG. 5. In the case when the two-dimensional lattice pattern is a combination of stripe patterns that varies according to a sinusoidal waveform, two-dimensional super-resolution can be performed by extending Equations (1.1) to (1.3) to two coordinate axes. Specifically, assuming $I_i(x, y, z)$ be the intensity observed at the sample position $(x, y, z)$, which is a shift position specified by the suffix i (i is 0 or more and $N_1$ - 1 or less, or 0 or more and $N_2$ - 1 or less, where $N_1$ and $N_2$ both 3 or greater), the following calculation is carried out:

[Math 2]

$$C_{2x}(x,y,z) = \sum_{i=0}^{N_1-1} I_i(x,y,z)\cos(2\pi\frac{i}{N_1}) \qquad (2.1)$$

$$S_{2x}(x,y,z) = \sum_{i=0}^{N_1-1} I_i(x,y,z)\sin(2\pi\frac{i}{N_1}) \qquad (2.2)$$

$$\phi_x(x,y,z) = \tan^{-1}(S_{2x}(x,y,z)/C_{2x}(x,y,z)) \qquad (2.3)$$

$$C_{2y}(x,y,z) = \sum_{i=0}^{N_2-1} I_i(x,y,z)\cos(2\pi\frac{i}{N_2}) \qquad (2.4)$$

$$S_{2y}(x,y,z) = \sum_{i=0}^{N_2-1} I_i(x,y,z)\sin(2\pi\frac{i}{N_2}) \qquad (2.5)$$

$$\phi_y(x,y,z) = \tan^{-1}(S_{2y}(x,y,z)/C_{2y}(x,y,z)) \qquad (2.6)$$

where periods d1 and d2 are the repetition periods of the intensity patterns in the x and y directions, respectively, of the patterned X-ray sheet beam. Then, by calculating values d1 x $[\varphi_x(x, y, z)/2\pi]$ and d2 $\times$ $[\varphi_y(x, y, z)/2\pi]$ for x and y coordinates, respectively, the coordinates of the X-ray excitable luminescent material can be determined with higher precision than the pitch of the two-dimensional lattice pattern formed by the patterned X-ray sheet beam 1, thereby achieving super-resolution. Phase correction (unwrapping calculation) by integer multiples of $\pi$ can be performed in the same manner as for the one-dimensional stripe pattern for each of the x and y coordinates.

Note that the aforementioned periods d1 and d2 are patterns formed in the X-ray sheet beam and can be determined independently of or in relation to the resolution capability of the observation optical system 50. Here, the reference value for the resolution of the observation optical system 50 is, for example, when the observation optical system 50 adopts an imaging element 54, the size of the range on the xy plane of the object side incident on a single photodetector, the size of the Airy disk (Airy disk) of the imaging optical system 52, the point spread function (PSF) of the imaging optical system, and is a freely selectable size that serves as an index of the resolving power of the observation optical system 50 itself.

When the periods d1 and d2 are set smaller than the resolution capability of the observation optical system 50, the observation optical system 50 does not have the ability to resolve structures finer than the periods d1 and d2. Nevertheless, the X-ray illumination microscope 100 as a whole can achieve higher resolution within the xy plane of the observation optical system 50 through the aforementioned super-resolution technique.

Even when the periods d1 and d2 are set to be approximately equal to the resolution limit of the observation optical system 50, the observation optical system 50 does not have the ability to resolve structures finer than the periods d1 and d2. Nevertheless, the X-ray illumination microscope 100 as a whole can achieve a resolution higher than the resolution of the observation optical system 50 within the xy plane by the super-resolution technique described above. In this case, when intensity sample values such as those shown in FIG. 13B are obtained in the stripe pattern, it is possible to determine which of the multiple intensity strips is emitting X-ray excitable luminescent material by the capability of the observation optical system 50.

When the periods d1 and d2 are set larger than the resolution capability of the observation optical system 50, the observation optical system 50 can resolve structures finer than the periods d1 and d2. However, if the positions shown in FIG. 13C can be identified with high accuracy, the X-ray illumination microscope 100 as a whole can achieve higher resolution within the xy plane of the observation optical system 50 by the super-resolution technique described above. The finite number of sample points shown in FIG. 13B can be determined for each X-ray intensity period. For example, when the resolution of the observation optical system 50 is the same as that of the pixels of the imaging element 54, and the pixel size is appropriate for the X-ray intensity period, the intensity curve can be determined for each pixel as shown in FIGS. 13B and 13C, and the position can be identified.

The change in periods d1 and d2 can be performed by adjusting the conditions for forming intensity pattern 2, such as changing the interference conditions shown in FIG. 7A and B. Furthermore, changes to the size of the reference size for the resolution capability of the observation optical system 50 can be implemented by modifying the imaging optical system 52, such as adjusting the magnification of the objective lens, changing the imaging element 54, or modifying the range over which the outputs of multiple light-receiving elements in the imaging element 54 are integrated (or adjusting the resolution of the electronic image).

1-6. Method for Capturing Image of Luminescent Material

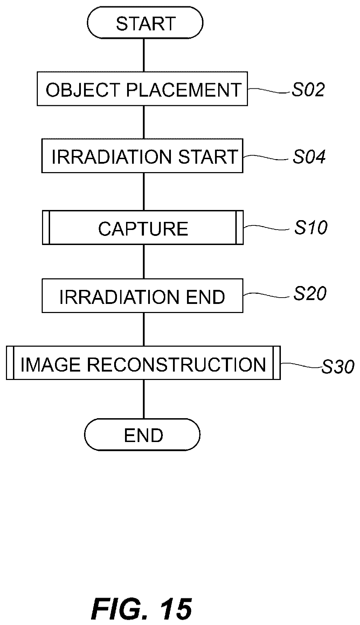

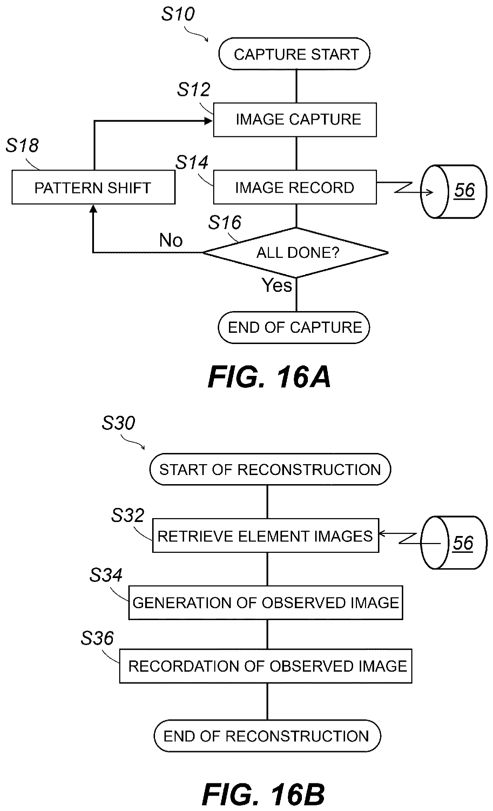

Next, a method for capturing an image of a luminescent material using the X-ray illumination microscope 100 mentioned above will be described. FIG. 15 is a flowchart illustrating an example of the method for capturing an image of a luminescent material in the present embodiment, and FIGS. 16A and 16B are flowcharts illustrating details of the capturing step and the image reconstruction step in the same method.

FIG. 15 shows the overall flow of the capturing method. In this capturing method, the X-ray illumination microscope 100 described above is used. The object to be observed 7 is labeled with an X-ray excitable luminescent material 8 selected according to the observation purpose. At the start of capturing, this labeled portion (labeled portion) is placed in a partial region 32 (S02). Next, a patterned X-ray sheet beam 1 is generated by the X-ray irradiation unit 10, and irradiation is started (S04). Then, the observation wavelength radiation from the X-ray excitable luminescent material 8 is received by the observation optical system 50 and captured (S10). When the capture is completed, the irradiation of the patterned X-ray sheet beam 1 is terminated (S20), and image reconstruction is performed as necessary (S30). In the example shown here, the irradiation step is performed so that the start of irradiation (S04) and the end of irradiation (S20) overlap in time with the shooting step (S10). The irradiation of X-rays onto the object to be observed 77 may be continuous between S04 and S20, or it may be intermittent. In addition, image reconstruction (S30) can be performed at any timing after shooting (S10) is completed.

The shooting step (S10) is performed as shown in FIG. 16A, for example. Specifically, in the shooting step (S10), image capture (S12) by the observation optical system 50 is performed multiple times. In each time, the intensity pattern 2 of the patterned X-ray sheet beam 1 can be shifted as shown in FIG. 13A where $\varphi = 0$ to $5/3\pi$ (S18). Since the captured image is not the image to be finally observed, it is called an element image in the present embodiment. The element image is recorded (S14), and a determination is made as to whether all phases to be shifted have been selected (S16). Here, if the intensity pattern 2 is a stripe pattern, the shift is a shift in the direction of repetition. A typical shift is performed so that one cycle of the stripes is divided into multiple parts and all of them are selected. The recorded element images are stored in the image recording unit 56 in a form that can be used for reconstruction by a freely selectable method, such as by associating them with the shift amount of the pattern.

Image reconstruction (S30) is performed as shown in FIG. 16B, for example. Specifically, first, element images corresponding to the shift amount are retrieved from the image recording unit 56 (S32). Next, processing is performed to generate an observation image based on the retrieved element images (S34). This processing is similar to processing according to equations (1.1) to (1.3) if the intensity pattern 2 is a stripe pattern, and similar to processing according to equations (2.1) to (2.6) if the intensity pattern 2 is a two-dimensional lattice pattern. The generated observation image is recorded as necessary (S36).

2. Variations

The present embodiment may be modified in various ways other than the above-described structure. Here, modification examples are described with respect to the structure of the intensity pattern (2-1), the intensity pattern generation method (2-2), the reconstruction method (2-3), and others (2-4).

2-1. Variations in the Structure of Intensity Patterns

The structure of intensity patterns such as stripe patterns and two-dimensional lattice patterns has been described above, and the method of generating intensity patterns has been explained mainly in terms of interference. The intensity patterns of the present embodiment are not limited to such structures and generation methods. For example, in addition to patterns where intensity changes sinusoidally, patterns where intensity changes in a rectangular waveform such that it effectively takes two values, or patterns where intensity changes in a sawtooth waveform, can be adopted. When adopting these patterns, the set of orthogonal functions used to express the series of products with orthogonal functions, as shown in Equations (1.1) to (1.3) and Equations (2.1) to (2.6), is appropriately selected.

Furthermore, it is possible to adopt techniques such as ghost imaging and compressed sensing using randomly structured lighting.

2-2. Method of Generating Intensity Patterns

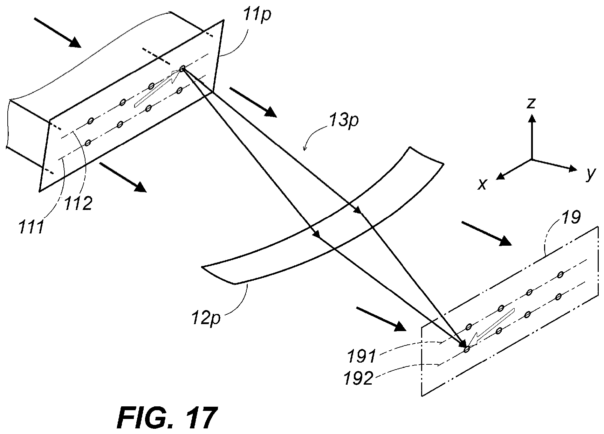

With regard to the intensity pattern generation method, in relation to FIGS. 8A, 10A, and 10B, a method of forming a sheet beam using an X-ray limiting element 11 and an X-ray converging unit 12, and further generating an X-ray intensity pattern using a diffraction grating 14 and X-ray prisms 17 and 172, has been described. In this case, the X-ray converging unit 12 is a Walter mirror reflection optical system combining a hyperbolic mirror and an elliptical mirror, and is described as having imaging performance in the x-z plane. On the other hand, if a Walter mirror (two-dimensional Walter mirror) capable of imaging in two dimensions is used for the X-ray converging unit 12, or a mirror having a rotational ellipsoid surface as a reflecting surface (rotational ellipsoid mirror) is used for the X-ray converging unit, imaging becomes possible. In this case, the exit surface of the X-ray limiting element 11 (FIG. 8A) and the surface parallel to the xz plane in the vicinity of the observation area 4 (FIG. 9B) can be made optically conjugate to each other. FIG. 17 is a structural diagram showing an example of the structure of an X-ray irradiation unit when a pinhole array and a secondary Walter mirror are used. The X-ray limiting element 11p has a plurality of pinholes arranged in a predetermined array so as to allow X-ray beams from the X-ray source to pass through. In FIG. 17, pinhole arrays 111 and 112 are shown schematically as examples. The pinholes can be arranged in any pattern that can be formed on the X-ray limiting element 11p. The X-ray converging unit 12p is typically a two-dimensional Walter mirror or a rotational ellipsoid mirror and is an X-ray reflecting element of an appropriate shape that can form a two-dimensional image. The X-ray sheet beam 13p has a pattern formed corresponding to the pinhole array in the X-ray limiting element 11p. However, due to far-field distribution of the X-ray source and the diffraction of each pinhole, the X-ray beams corresponding to each pinhole in the X-ray sheet beam 13p spread with distance from the X-ray limiting element 11p. The X-ray converging unit 12p has a deflection function that reflects the X-ray sheet beam 13p so that its overall direction is toward the y-axis, as well as a function that forms an image within the xz plane after reflection. FIG. 17 shows how the pinhole array conjugate images 191 and 192, which are conjugate images of pinholes, are formed on the focal plane 19 parallel to the xz plane. FIG. 17 also shows straight lines connecting the corresponding pinholes in the pinhole arrays 111 and 112 with the corresponding images in the pinhole array conjugate images 191 and 192 via the X-ray converging unit 12p. X-rays passing through each actual pinhole have the above-mentioned spread until they reach the position where they are reflected by the X-ray converging unit 12p, and after reflection, they converge due to the action of the X-ray converging unit 12p. The two lines showing this spread for a single pinhole are these straight lines. Additionally, the positions of the X-ray limiting element 11p and the focal plane 19 are indicated by white arrows showing the appearance of the conjugate images. In this way, X-rays passing through each pinhole in the pinhole arrays 111 and 112 form the pinhole array conjugate images 191 and 192, respectively. Furthermore, the distance from the X-ray limiting element 11p to the focal plane 19 is adjustable due to the specific design of the X-ray converging unit 12p. For the sake of explanation, the imaging of X-rays onto the pinhole array conjugate images 191 and 192 has been explained, but an X-ray pattern corresponding to the pinhole array conjugate images 191 and 192 is also formed with a spread at a position shifted in the y-axis direction from the focal plane 19 in focus in this imaging, and a sufficiently practical intensity change can be achieved in the range of the partial region (not shown in FIG. 17) of the sheet area. Therefore, by adopting such an X-ray limiting element 11p and an X-ray converging unit 12p, it is possible to form an intensity pattern 2 having both z-direction intensity variation corresponding to the pinhole array conjugate images 191 and 192 and x-direction intensity variation in the sheet area 3. Each of the pinhole array conjugate images 191 and 192 constitutes a single sheet area, and two single sheet areas overlapping in the z-axis direction, i.e., over the thickness direction, are formed. Although FIG. 17 shows a Walter mirror that utilizes reflection for the X-ray converging unit, the X-ray converging unit 12p may be replaced by a rotating elliptical mirror.

The two-dimensional imaging effect of the two-dimensional Walter mirror and the rotational ellipsoid surface described above for the X-ray converging unit 12 enables an intensity pattern 2 with intensity variations in the x direction and z direction according to the pattern of the X-ray transmission section in the X-ray limiting element to be formed in the sheet area 3. In this case, in addition to having a pinhole array such as the X-ray limiting element 11p, the X-ray irradiation unit 10 may adopt a slit array (not shown) so that a pattern formed by imaging that reflects the arrangement of the slits at the observation area 4 can also be formed. The slit array may be arranged so that it has one slit at each of the positions of the pinhole arrays 111 and 112 shown in FIG. 17, for example.

As described above, in a structure in which a two-dimensional Walter mirror or a rotational ellipsoid surface is used for the X-ray converging unit 12p, structured illumination of X-rays can be achieved without inserting a diffraction grating, and flexible intensity patterns can be formed by the X-ray transmission section formed in the X-ray limiting element, which is advantageous. In addition, in such a structure, by mechanically moving the X-ray limiting element, it is possible to shift the positions of the slits, slit arrays, pinholes, and pinhole arrays relative to the position of the object to be observed 7, thereby shifting the X-ray intensity pattern.

2-3. Modified Example of Reconstruction Method

In Section 1-5-2, a calculation algorithm for a fringe scanning method was described as an example of a reconstruction method for achieving super-resolution. The reconstruction method for super-resolution in the present embodiment is not limited to this. In the present embodiment, as an example, a reconstruction calculation method for light fields (intensity information and phase information) can be applied. In this reconstruction calculation method, using a Fourier ptychographical iterative engine (see Non-Patent Documents 4 and 5), an iterative algorithm can be applied to images that have lost phase information acquired by structured illumination microscopy to perform super-resolution and phase recovery. Furthermore, a method can be adopted that uses the difference in resolution between X-ray illumination and optical observation, and employs convergence operation constraints to significantly reduce computational load.

2-4. Others

The observation optical system 50 is illustrated as having a single structure in which the optical axis is directed in a third direction (z direction) perpendicular to both the first direction (x direction) and the second direction (y direction), but the present disclosure is not limited to this arrangement of the observation optical system. In the X-ray illumination microscope of the present disclosure, it is also possible to observe by arranging a plurality of observation optical systems. In a structure that employs the plurality of observation optical systems, stereo vision can be achieved and observation at multiple wavelengths can be performed simultaneously by, for example, employing two observation optical systems inclined from the third direction (z direction).

3. Examples

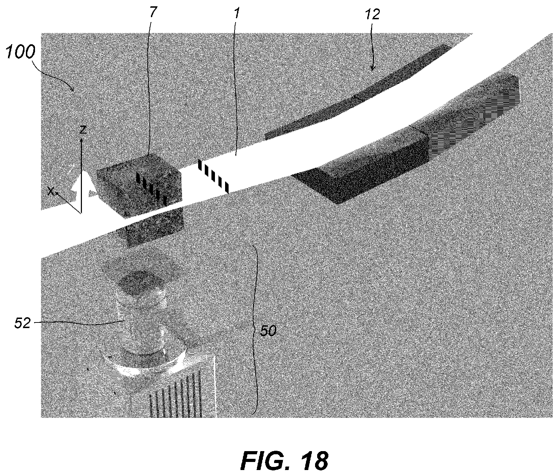

As an example of the present embodiment, the details of an observation experiment using the X-ray illumination microscope 100 shown in FIG. 1 and FIGS. 9A and 9B are described. FIG. 18 is a perspective view showing the structure of the X-ray illumination microscope 100 in the observation experiment of this embodiment. FIG. 18 schematically shows an actual example of the structure of the X-ray illumination microscope 100 in FIG. 1. The coordinate system related to FIG. 18 in the following description is consistent with the previous description. The observation experiment of this embodiment was conducted at the experimental hatch 3 of the BL29XU undulator beamline at the synchrotron radiation facility SPring-8 (Sayo Town, Hyogo Prefecture, Japan). The X-ray energy used was monochromatized X-rays with an energy of 8 keV, and a double-crystal spectrometer was adopted for the monochromatization.

In order to construct a patterned X-ray sheet beam 1, i.e., an X-ray light sheet showing intensity variation in the x direction, as shown in FIG. 1 and FIGS. 9A and 9B, an X-ray sheet beam 13 (FIG. 9A) that does not show intensity variation in the x direction is first generated. A one-dimensional Wolters mirror (focal length approx. 200 mm) was used as an X-ray lens for one-dimensional focusing in the vertical direction (z direction). This X-ray lens is an optical element corresponding to the X-ray converging unit 12 and is indicated by the same reference numerals as in FIG. 18. In addition, a slit with an opening of 10 to 30 $\mu$m was adopted as a slit corresponding to the X-ray limiting element 11 (e.g., FIG. 8A). This opening acts as a virtual light source of a reduced image formed on an image plane parallel to the zx plane in the observation area (observation area 4 in FIG. 9A) by the action of the X-ray lens 12. The vertical width (z-direction thickness) of the formed one-dimensional focused X-ray beam is 65~ 100 nm, as reported in Non-proprietary Document 2. This one-dimensional focused X-ray beam corresponds to the X-ray sheet beam 13 in FIG. 9A.

Furthermore, in order to generate a patterned X-ray sheet beam 1 that shows an intensity change in the horizontal direction (x direction) as shown in FIG. 1 and FIG. 9A from the one-dimensional focused X-ray beam that is the X-ray sheet beam 13, a diffraction grating 14V similar to the diffraction grating 14V shown in FIG. 9B (not shown in FIG. 18, described later) is placed on the downstream side of the X-ray beam of the X-ray lens 12 so that it has a grating vector in the x direction. The patterned X-ray sheet beam 1 downstream of the X-ray beam that has passed through this diffraction grating is an interference structure formed by self-images due to the Talbot effect, as shown in FIG. 9A, and shows an intensity change in the x direction. This diffraction grating was fabricated by depositing a tantalum film approximately 1 $\mu$m thick on a SiC/SiN membrane on a silicon substrate to achieve a $\pi/2$ phase diffraction grating for 8 keV monochromatic light. The period length (pitch = P) of the diffraction grating and the horizontal self-image was set to 5 $\mu$m. The structure of the diffraction grating has an L/S (line/space) width of P/2. The positional relationship between the diffraction grating and the sample position is such that the observation area 4 (not shown in FIG. 18) set inside the object to be observed 7 is located 8 cm downstream of the diffraction grating 14V. This position is half the Talbot distance at 8 keV.

The observed object, i.e., the object to be observed, was obtained by containing X-ray scintillator nanoparticles, or quantum dots of $CsPbBr_3$ smaller than 25 nm in size, in toluene solution. These quantum dots of $CsPbBr_3$ can generate visible scintillation light with high efficiency when irradiated with X-rays.

For observation, a two-dimensional test pattern was used to align the visible light microscope observation system with the X-ray optical axis. A cover glass for optical microscopes, mainly composed of borosilicate glass, was used as the base, and a pattern with a two-step height difference was formed on its surface using a resist agent called SU8. A toluene solvent containing the above quantum dots was dropped onto the surface, allowed to dry, and $CsPbBr_3$ scintillator nanoparticles were attached.

In the observation example using the X-ray illumination microscope 100 that adopts the patterned X-ray sheet beam 1 shown in FIG. 9A, in order to obtain the data shown in the bar graph in FIG. 13B, the diffraction grating 14V itself was translated in the x-axis direction by 250 nm relative to the other components. The feed amount of 250 nm is the value obtained by dividing the pitch P (5 $\mu$m) of the diffraction grating 14V into 20 parts, and the translation of this diffraction grating 14V caused the self-image formed by the Talbot effect to also translate in the x-axis direction. FIG. 18 schematically shows the position of the diffraction grating and the position of its self-image seen in the patterned X-ray sheet beam 1 before irradiation onto the object to be observed 7 and inside the object to be observed 7.

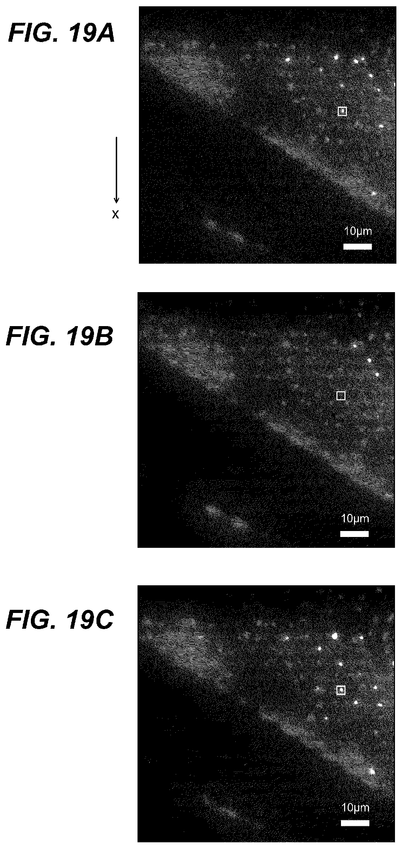

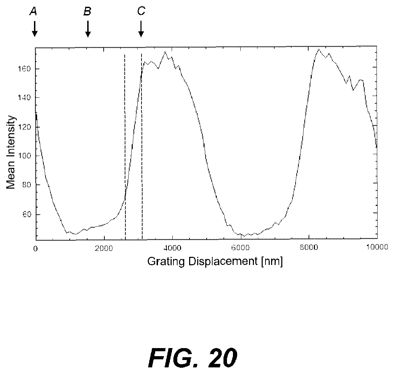

FIGS. 19A to C are microscope images showing scintillation images taken of the object to be observed in this embodiment. FIG. 20 is a graph showing the average brightness within the square enclosed by the white lines in FIGS. 19A to C in this embodiment as a function of the translation amount of the diffraction grating 14V. FIGS. 19A to C are images of the same position of the first object to be observed, which were continuously taken while continuing the step of translating the diffraction grating 14V itself in the x-axis direction by 250 nm. Positions with high intensity due to scintillation are displayed brightly. At each position in FIGS. 19A to C  the brightness of each part changes according to the translation amount of the diffraction grating 14V. For example, looking at the square areas indicated by white lines, a clear bright spot is observed in FIGS. 19A and 19C, but almost no bright spots are observed in FIG. 19B. This reflects the repeated intensity fluctuations of the X-rays with respect to the scintillator nanoparticles existing at this position. Thus, the present embodiment demonstrates that the X-ray illumination microscope 100 of the present embodiment is operable, and in particular, that the light emission intensity of the scintillator nanoparticles is sensitively responsive to the intensity change of the X-rays due to the translation of the diffraction grating 14V, i.e., the patterned X-ray sheet beam 1.

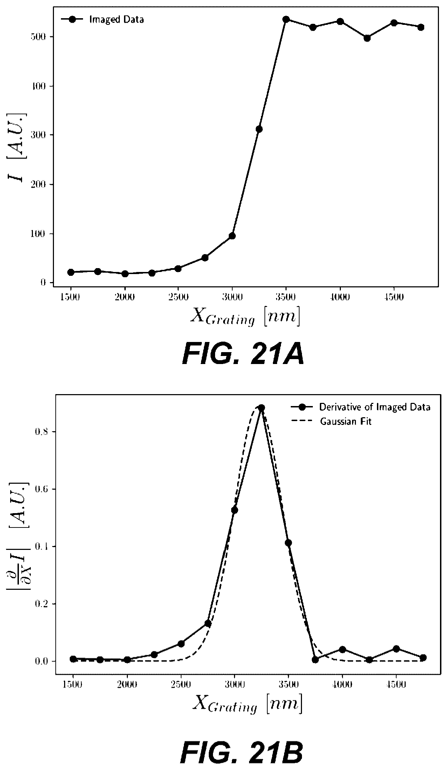

Furthermore, FIG. 20 shows the translational positions of the diffraction grating 14V in FIGS. 19A to C respectively, indicated by arrows A to C. In the curves of FIG. 20, a clear change in brightness is observed in particular for the translational positions of the diffraction grating 14V of about 0.5 $\mu$m indicated by the two chain lines. FIGS. 21A and 21B are graphs explaining the process of determining super-resolution performance based on brightness changes. FIG. 21A is a graph showing the brightness in FIG. 20 for a range of translational positions of the diffraction grating, and FIG. 21B is a graph showing the difference values of the brightness. The horizontal axis of each graph is the translation position of the diffraction grating 14V, and the solid line in FIG. 21B is obtained by calculating the difference value (difference intensity) from the brightness in FIG. 21A. At the peak position of the difference intensity, it can be estimated that the X-coordinate of the boundary where the intensity change in the self-image due to the Talbot effect by the diffraction grating matches the X-coordinate of the scintillator nanoparticles. By fitting a curve assuming a Gaussian distribution, such as the dotted line in FIG. 21B, to this difference intensity distribution, it is possible to perform an error evaluation of the position of the scintillator nanoparticles. The example in FIG. 21B shows that super-resolution performance well exceeding 100 nanometers can be obtained. In this way, the present embodiment has confirmed through examples that the X-ray illumination microscope 100 can achieve super-resolution imaging exceeding the resolution limit of visible light microscopes, which is approximately 400 nm.

4. Conclusion

The embodiments of the present disclosure have been described in detail above. The above embodiments, modifications, and examples are described to explain the invention of the present disclosure, and the scope of the invention of the present disclosure should be determined based on the claims. Variants existing within the scope of the present disclosure, including other combinations of embodiments, are also included in the scope of the claims of the present disclosure. That is, a person skilled in the art can make various changes, combinations, subcombinations, and substitutions with respect to the components of the above embodiments within the scope of the technical scope of the present invention or its equivalents.

Industrial Applicability

The invention of the present disclosure can be used in microscopes that use X-rays for observation for the purpose of illumination and excitation of materials.

Reference Signs List

100 X-ray illumination microscope
1, 1a, 1b patterned X-ray sheet beam
1c patterned X-ray sheet beam (multi-layer pattern)
10 X-ray irradiation unit
11, 11p X-ray limiting element
111, 112 pinhole array
12, 12p X-ray converging unit, X-ray lens
13, 13a, 13b, 13c, 13d, 13p X-ray sheet beam
14, 14v diffraction grating
15 X-ray branching element
16a, 16b X-ray interference unit
17, 172, 174a, 174b X-ray prism
18a, 18b X-ray mirror
19 focal plane
191, 192 pinhole array conjugate image
2 intensity pattern
3 sheet area
32 partial region
341, 342 single sheet area
4 observation area
42 field of view
44 depth of field
50 observation optical system
52 imaging optical system
54 imaging element
56 image recording unit
7 object to be observed
72 glass
8 X-ray excitable luminescent material
900 X-ray light sheet microscope
91 X-ray sheet beam

**Claims**

1. A microscope comprising:

    an X-ray irradiation unit that generates a patterned X-ray sheet beam for illuminating an object to be observed, the patterned X-ray sheet beam having an intensity pattern in which intensity varies repeatedly with respect to a position in a direction included in a spread in a partial region of a sheet area having a spread; and
    an observation optical system that receives radiation of an observation wavelength from the observation area, the observation optical system being positioned so that the observation area includes at least a portion of the partial region.

2. The microscope according to claim 1, wherein the observation optical system has an optical axis oriented in an normal direction of the spread of the sheet area.

3. The microscope according to claim 1, wherein the intensity pattern is generated by interference of X-rays.

4. The microscope according to claim 1, wherein the intensity pattern is a stripe pattern that has an intensity that repeats in one direction and extends in another direction that is not parallel to the one direction, the stripe pattern being included in the spread of the sheet area.

5. The microscope according to claim 4, wherein the X-ray irradiation unit comprises:

   an X-ray converging unit provided in an optical path of an X-ray emitted from an X-ray source and passed through a slit, the X-ray converging unit generating at least one X-ray sheet beam narrowed in a direction; and
   a diffraction grating provided in an optical path of the X-ray sheet beam, the diffraction grating generating the patterned X-ray sheet beam having the stripe pattern.

6. The microscope according to claim 4, wherein the X-ray irradiation unit comprises:

   an X-ray converging unit provided in an optical path of an X-ray emitted from an X-ray source and passed through a slit, the X-ray converging unit generating at least one X-ray sheet beam narrowed in a direction;
   an X-ray branching unit provided in an optical path of the X-ray sheet beam, the X-ray branching unit generating a first X-ray sheet beam and a second X-ray sheet beam that are both narrowed in a direction; and
   an X-ray interference unit that directs the first X-ray sheet beam and the second X-ray sheet beam to propagate non-parallel to each other so that the patterned X-ray sheet beam having the stripe pattern is generated by interference.

7. The microscope according to claim 4, wherein the X-ray irradiation unit comprises:

   an X-ray converging unit provided in an optical path of an X-ray emitted from an X-ray source and passed through a slit, the X-ray converging unit generating at least one X-ray sheet beam that is narrowed in a direction; and
   an X-ray prism provided in an optical path of the X-ray sheet beam, the X-ray prism generating at least one of a first X-ray sheet beam and a second X-ray sheet beam that are both narrowed in a direction and propagate non-parallel to each other so that the patterned X-ray sheet beam having the stripe pattern is generated by interference.

8. The microscope according to claim 1, wherein the X-ray irradiation unit comprises:

   an X-ray limiting element having a predetermined transmission pattern, the X-ray limiting element provided in an optical path of an X-ray emitted from an X-ray source; and
   an X-ray converging unit provided downstream of the X-ray limiting element in the optical path of the X-ray, the X-ray converging unit having converging capability of the X-ray in two directions intersecting the optical path of the X-ray.

9. The microscope according to claim 1, wherein the intensity pattern is a two-dimensional lattice pattern in the spread of the sheet area.

10. The microscope according to claim 1,

    wherein the sheet area includes a plurality of single sheet areas each having a spread, each single sheet area arranged stacked on top of each other,
    wherein the intensity pattern of the patterned X-ray sheet beam is a multi-layer pattern, the multi-layer pattern formed by stacking single layer patterns at a distance from each other, each of whose single sheet area having a spread in each single sheet area, and
    wherein the single layer pattern has an intensity pattern in which intensity repeats in a partial region of each single sheet area.

11. The microscope according to claim 1,

    wherein the sheet area has a thickness across a direction normal to the spread, and
    wherein the intensity pattern of the patterned X-ray sheet beam has an intensity that varies repeatedly in the normal direction in a partial region within a range determined by the spread and the thickness.

12. The microscope according to claim 1, further comprising

a pattern shifter that shifts a relative position of the intensity of the intensity pattern with respect to the object to be observed in at least one of the direction of intensity repetition or the normal direction of the spread of the sheet area.

13. A method for capturing an image of a luminescent material using the microscope according to claim 1, comprising:

a step of placing a labeled portion of an object to be observed, the labeled portion being made of an X-ray excitable luminescent material in the partial region;
an irradiation step of generating the patterned X-ray sheet beam by the X-ray irradiation unit; and
a capturing step of receiving radiation of an observation wavelength from the X-ray excitable luminescent material by the observation optical system.

14. The method for capturing an image of a luminescent material according to claim 13, further comprising

a pattern shifting step of shifting the relative position of the intensity of the intensity pattern with respect to the object to be observed in the irradiation step in the direction of repetition of the intensity of the intensity pattern, wherein the capturing step is repeated a plurality of times with the pattern shifting step interposed therebetween.

15. The method for capturing an image of a luminescent material according to claim 14,

wherein the observation optical system receives radiation of the observation wavelength a plurality of times corresponding to the plurality of capturing steps and records a plurality of element images in an image recording unit,
further comprising an image reconstruction step in which an observation image is reconstructed based on the plurality of element images recorded in the image recording unit.

16. The method for capturing an image of a luminescent material according to claim 13, further comprising
a pattern rotation step of changing a relative orientation of the repeat direction of the intensity in the intensity pattern with respect to the object to be observed.

**FIG. 1**

# FIG. 2A

# FIG. 2B

FIG. 3A

FIG. 3B

**FIG. 4A**

**FIG. 4B**

**FIG. 4C**

**FIG. 5**

**FIG. 6**

FIG. 7A

FIG. 7B

*FIG. 8A*

*FIG. 8B*

**FIG. 9A**

**FIG. 9B**

13

17

13A

13B

**FIG. 10A**

13

172

13A

13

**FIG. 10B**

**FIG. 11**

**FIG. 12A**

**FIG. 12B**

## FIG. 13A

$\Phi=0$

$2\pi/5$

$4\pi/5$

$6\pi/5$

$8\pi/5$

$2\pi$

x

$x_0$ d1 $x_0+d1$

## FIG. 13B

$\Phi=$
0 $\quad 2\pi/5 \quad 4\pi/5 \quad 6\pi/5 \quad 8\pi/5$

$x_0$ $\qquad x_0+d1$

## FIG. 13C

$x_0$ $\qquad\qquad x_0+d1$

d1 $(\Phi/2\pi)$

**FIG. 14**

START

OBJECT PLACEMENT —S02

IRRADIATION START —S04

CAPTURE —S10

IRRADIATION END —S20

IMAGE RECONSTRUCTION —S30

END

FIG. 15

S10

CAPTURE START

S12

IMAGE CAPTURE

S18

PATTERN SHIFT

S14

IMAGE RECORD → 56

S16

No — ALL DONE?

Yes

END OF CAPTURE

**FIG. 16A**

S30

START OF RECONSTRUCTION

S32

RETRIEVE ELEMENT IMAGES ← 56

S34

GENERATION OF OBSERVED IMAGE

S36

RECORDATION OF OBSERVED IMAGE

END OF RECONSTRUCTION

**FIG. 16B**

**FIG. 17**

**FIG. 18**

FIG. 19A

FIG. 19B

FIG. 19C

FIG. 20

FIG. 21A

FIG. 21B

## INTERNATIONAL SEARCH REPORT

| International application No. |
|---|
| **PCT/JP2024/007992** |

**A.    CLASSIFICATION OF SUBJECT MATTER**

*G21K 7/00*(2006.01)i; *G02B 5/18*(2006.01)i; *G02B 21/06*(2006.01)i; *G02B 21/36*(2006.01)i; *G21K 1/00*(2006.01)i; *G21K 1/06*(2006.01)i; *G21K 5/02*(2006.01)i

FI:   G21K7/00; G02B5/18; G02B21/06; G02B21/36; G21K1/00 X; G21K1/06 A; G21K5/02 X

According to International Patent Classification (IPC) or to both national classification and IPC

**B.    FIELDS SEARCHED**

Minimum documentation searched (classification system followed by classification symbols)

G21K7/00; G02B5/18; G02B21/06; G02B21/36; G21K1/00; G21K1/06; G21K5/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2018/106678 A1 (MEMORIAL SLOAN KETTERING CANCER CENTER) 14 June 2018 (2018-06-14)<br>      paragraphs [0053], [0225]-[0227], fig. 8A, 18 | 1-4, 9, 12-16 |
| Y | | 1-4, 9-16 |
| A | | 5-8 |
| Y | JP 2022-502704 A (THE UNIVERSITY OF HONG KONG) 11 January 2022 (2022-01-11)<br>      paragraphs [0029], [0059], fig. 2B, 11 | 1-4, 9-16 |
| A | | 5-8 |
| Y | KOHMURA, Yoshiki et al., The new X-ray/visible microscopy MAXWELL technique for fast three-dimensional nanoimaging with isotropic resolution, Nature, Scientific Reports, 11 June 2022, vol. 12, 9668, pp. 1-10<br>      pp. 2-3, fig. 1 | 1-4, 9-16 |
| A | | 5-8 |

☐ Further documents are listed in the continuation of Box C.      ☑ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **05 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/007992** |

| Patent document cited in search report | | | Publication date (day/month/year) | Patent family member(s) | | | Publication date (day/month/year) |
| --- | --- | --- | --- | --- | --- | --- | --- |
| WO | 2018/106678 | A1 | 14 June 2018 | US | 2023/0194427 | A1 | |
| | | | | paragraphs [0053], [0225]-[0227], fig. 8A, 18 | | | |
| | | | | EP | 3580598 | A1 | |
| JP | 2022-502704 | A | 11 January 2022 | US | 2021/0325651 | A1 | |
| | | | | paragraphs [0051], [0077], fig. 2B, 11 | | | |
| | | | | WO | 2020/063895 | A1 | |
| | | | | CN | 112930492 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BI-CHANG CHEN et al.** Lattice light-sheet microscopy: Imaging molecules to embryos at high spatiotemporal resolution. *Science*, 2014, vol. 346 (6208), 1257998-1, 1257998-10
- **Y. KOHMURA et al.** The new X-ray/visible microscopy MAXWELL technique for fast three-dimensional nanoimaging with isotropic resolution. *Scientific Reports*, 2022, vol. 12, 9668

- **J. H. BRUNING et al.** Digital wavefront measuring interferometer for testing optical surfaces and lenses. *Appl. Opt.*, 1974, vol. 13, 2693-2703
- **A. MAIDEN et al.** Further improvements to the ptychographical iterative engine. *Optica*, 2017, vol. 4 (7), 736-745
- **S. DONG et al.** High-resolution fluorescence imaging via pattern- -illuminated Fourier ptychography. *OPTICS EXPRESS*, 2014, vol. 22 (17), 20856-20870